# EUROPEAN PATENT SPECIFICATION

(11) **EP 3 418 893 B1**
(45) Date of publication and mention of the grant of the patent: **22.12.2021**
(21) Application number: 16890481.1
(22) Date of filing: 15.02.2016
(51) Int. Cl.: G06F 9/50, H04L 29/08, G05B 19/042

(54) **PROCESS CONTROL PROGRAM, PROCESS CONTROL METHOD, INFORMATION PROCESSING DEVICE, AND COMMUNICATION DEVICE**
PROZESSSTEUERUNGSPROGRAMM, PROZESSSTEUERUNGSVERFAHREN, INFORMATIONSVERARBEITUNGSVORRICHTUNG UND KOMMUNIKATIONSVORRICHTUNG
PROGRAMME DE COMMANDE DE PROCESSUS, PROCÉDÉ DE COMMANDE DE PROCESSUS, DISPOSITIF DE TRAITEMENT D'INFORMATIONS ET DISPOSITIF DE COMMUNICATION

(43) Date of publication of application: 26.12.2018
(73) Proprietor: Fujitsu Limited, Kawasaki-shi, Kanagawa 211-8588 (JP)
(72) Inventor: NAKAJIMA, Tomohiro, Kawasaki-shi Kanagawa 211-8588 (JP)
(74) Representative: Hoffmann Eitle
(86) International application number: PCT/JP2016/054351
(87) International publication number: WO 2017/141339

(56) References cited:
- WO-A1-2010/107105
- WO-A1-2014/016912
- JP-A- 2011 170 774
- JP-A- 2014 137 709
- US-A1- 2014 201 332
- US-B1- 6 385 636

## Description

### Technical Field

The present invention relates to a process control program, a process control method, an information processing device, and a communication device.

### Background Art

In recent years, Internet of Things has been progressed, and new values and business have been developed by utilizing sensor data collected from persons and things. Moreover, various kinds of functions for dealing with a large amount of sensor data collected from persons and things are provided as cloud services.

In a related technique, there is a client/server system in which load distribution is performed between a client node and a server node. For example, when a server node receives a processing request signal from a client node, the server node acquires a central processing unit (CPU) use rate, and when the CPU use rate is a set value or more, transmits a response signal instructing the client node to execute the requested processing.

US 6 385 636 B1 relates to a distributed processing system in which one or more client machines (client nodes) and a server machine (server node) are connected through a network, a client node and a server node constituting such distributed processing system, and a distributed processing method in such distributed processing system. To suitably distribute the load between the client node and the server node in the client-server system, the client node sends a task request signal to the server node in response to input from a user. The server node, upon receiving the task request signal, acquires a CPU load ratio from the operating system and performs the requested task when the CPU load ratio is lower than a preset value to send the result of the task to the client node. Conversely, when the CPU load ratio is higher than the preset value, the server node sends a response signal to the effect that the client node is to execute the requested task. When the client node requests transmission of an application program in response to the response signal from the server, the server node sends an application program for use in performing the requested task to the client node. The client node executes the application program and obtains the result of the task.

### Citation List

### Patent Literature

PTL 1: Japanese Laid-open Patent Publication No. 11-53326

### Summary of Invention

### Technical Problem

However, a problem of the related technique is an increase in the load of a sever that executes the processing of the collected sensor data. For example, it is difficult to predict the timing at which sensor data is collected to cause a sudden increase in the load of the server along with an increase in the amount of sensor data to be collected in some cases.

With one aspect, the present invention aims to provide a computer-readable storage medium storing a process control program, a process control method and an information processing device that appropriately distribute the load for the processing of data.

### Solution to Problem

The present invention is defined in the appended independent claims. Further preferred embodiments are defined in the dependent claims.

One aspect of the present invention provides a process control program, a process control method, and an information processing device, comprising: receiving data from each of a plurality of communication devices that transmit collected data; requesting a corresponding information processing device to process the received data; and when an index value of a load for data received from a communication device belonging to a specific group among the plurality of the communication devices reaches a prescribed reference, requesting a communication device belonging to the specific group to execute in advance a process executable by each communication device belonging to the specific group, out of processes to be executed by the information processing device that is to be requested to process the data received from the communication device belonging to the specific group.

Moreover, one aspect of the present invention provides a process control program, a process control method, and an information processing device, comprising: receiving data from each of a plurality of communication devices that transmit collected data; requesting a corresponding information processing device to process the received data; and when an index value of a load for data received from at least a communication device belonging to a first group and a communication device belonging to a second group reaches a prescribed reference among the plurality of the communication devices, requesting a communication device belonging to the first group to execute in advance a first process executable by each communication device belonging to the first group out of processes to be executed by the information processing device that is to be requested to process the data received from the communication device belonging to the first group, and requesting a communication device belonging to the second group to execute in advance a second process executable by each communication device belonging to the second group out of processes to be executed by the information processing device that is to be requested to process the data received from the communication device belonging to the second group.

Moreover, one aspect of the present invention provides a process control program, a process control method, and an information processing device, comprising: receiving data from each of a plurality of communication devices that transmit collected data; requesting a corresponding information processing device to process the received data; and performing control of switching a range of communication devices to be requested to execute in advance a process that the information processing device is to be requested to execute, to a range of communication devices belonging to a specific group among the plurality of communication devices when an index value of a first load for data received from a communication device belonging to the specific group reaches a first threshold, or to a range of communication devices belonging to different groups among the plurality of communication devices when an index value of a second load for data received from communication devices belonging to the different groups reaches a second threshold.

Moreover, one aspect of the present invention provides a process control program, a process control method, and a communication device, comprising: when the communication device receives a request from a transmission destination device of the collected data depending on an index value of a load for data received from a communication device belonging to the same specific group as the communication device, the request being a request to execute in advance a process executable by each communication device belonging to the specific group, out of processes to be executed by an information processing device to be requested to process the data received from the communication device belonging to the specific group, executing the process on the collected data, and transmitting the data thus processed in association with information indicating that the data is already processed to the transmission destination device.

### Advantageous Effects of Invention

According to one aspect of the present invention, the effect that the load exerted on the processing of data is capable of being distributed is obtained.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### Brief Description of Drawings

[FIG. 1] FIG. 1 is an explanation diagram illustrating an example of a process control method according to an embodiment.
[FIG. 2] FIG. 2 is an explanation diagram illustrating a system configuration example of a process control system 200.
[FIG. 3] FIG. 3 is a block diagram illustrating a hardware configuration example of an information processing device 101 and others.
[FIG. 4] FIG. 4 is an explanation diagram illustrating one example of stored contents of a load condition table 230.
[FIG. 5] FIG. 5 is an explanation diagram illustrating one example of stored contents of a load state table 240.
[FIG. 6] FIG. 6 is a block diagram illustrating a functional configuration example of the information processing device 101.
[FIG. 7] FIG. 7 is a block diagram illustrating a functional configuration example of a gateway device GWi.
[FIG. 8] FIG. 8 is a flowchart illustrating one example of a first process control processing procedure of the information processing device 101.
[FIG. 9] FIG. 9 is a flowchart illustrating one example of a specific processing procedure in a load determination processing procedure.
[FIG. 10] FIG. 10 is a flowchart illustrating one example of a second process control processing procedure of the information processing device 101.
[FIG. 11] FIG. 11 is a flowchart (part 1) illustrating one example of a third process control processing procedure of the information processing device 101.
[FIG. 12] FIG. 12 is a flowchart (part 2) illustrating one example of the third process control processing procedure of the information processing device 101.
[FIG. 13] FIG. 13 is a flowchart illustrating one example of a process control processing procedure of the gateway device GWi.
[FIG. 14] FIG. 14 is a flowchart illustrating one example of a process control processing procedure of a server SVj.

### Description of Embodiment

An embodiment of a process control program, a process control method, an information processing device, and a communication device according to the present invention is described below in details with reference to the drawings.

### (Embodiment)

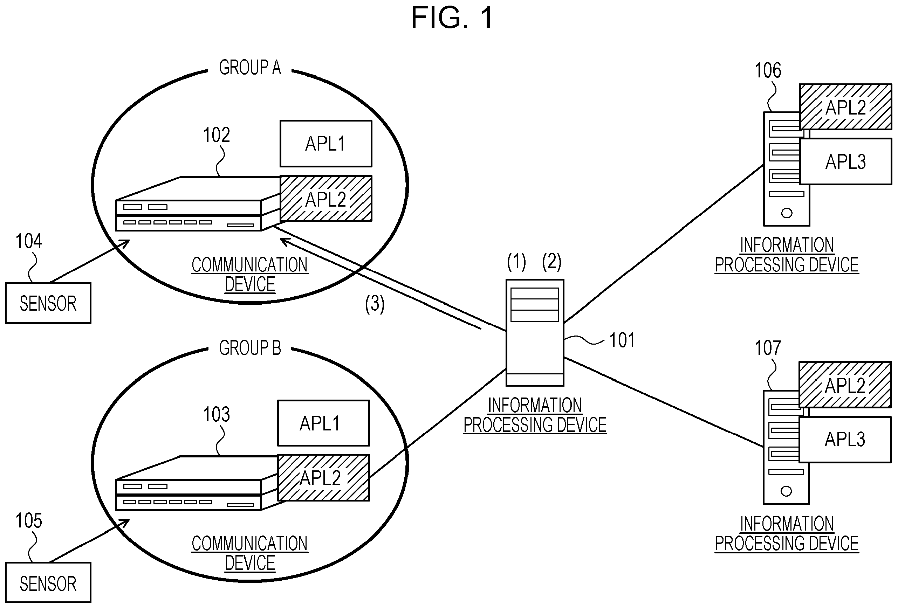

FIG. 1 is an explanation diagram illustrating an example of a process control method according to an embodiment. In FIG. 1, an information processing device 101 is a computer that performs load distribution for the processing of data. The data is, for example, data collected by each of communication devices 102 and 103.

The communication devices 102 and 103 are computers that each transmit collected data to the information processing device 101. The collected data is information indicating a physical amount measured by each of sensors 104 and 105, for example, physical amounts such as the temperature, the humidity, and the luminance in a certain place, and the position, the direction, the speed, and the acceleration of a certain object.

The information processing device 101 requests corresponding information processing devices 106 and 107 to process data received from the communication devices 102 and 103, respectively. The information processing devices 106 and 107 are computers that each execute the requested processing of data.

The correspondence relation between the communication devices 102 and 103 and the information processing devices 106 and 107 that are requested to process the data collected by the communication devices 102 and 103 is set in advance. For example, the information processing device 106 is requested to process data collected by the communication device 102. Meanwhile, the information processing device 107 is requested to process the data collected by the communication device 103.

Each of the communication devices 102 and 103 includes applications APL1 and APL2. Meanwhile, each of the information processing devices 106 and 107 includes applications APL2 and APL3. In the following explanation, an application is simply written as an "app" in some cases.

The app APL1 is an app executable in the communication devices 102 and 103, and is, for example, an app that collects data from the sensor 104 or 105. The app APL2 is an app executable in all of the communication devices 102 and 103 and the information processing devices 106 and 107, and is, for example, an app that reduces the data amount by thinning-out or calculating the collected data. The app APL3 is an app executable in the information processing devices 106 and 107, and is, for example, an app that performs various kinds of analyses and analytical studies relative to data processed by the app APL2.

Here, when the apps APL2 are run only on the information processing devices 106 and 107, the load for execution of the apps APL2 exerted on the information processing devices 106 and 107 increases as the amount of data collected becomes large. In addition, the load for the transfer of the collected data exerted on the information processing device 101 also increases.

Meanwhile, when the apps APL2 are run only on the communication devices 102 and 103, the load exerted on the information processing devices 106 and 107 and the information processing device 101 may be reduced. However, when the apps APL2 are run only on the communication devices 102 and 103, the load exerted on the communication devices 102 and 103 increases and it is difficult to sufficiently utilize the resources of the information processing devices 106 and 107.

Therefore, in the present embodiment, described is a process control method of appropriately distributing the load exerted on the processing of collected data by optimizing a place at which the data collected is subjected to a predetermined process (for example, the app APL2). Hereinafter, a process example of the information processing device 101 is described.
(1) The information processing device 101 calculates an index value of a load for data received from a communication device belonging to a specific group, out of the communication devices 102 and 103. Here, the specific group is a group including communication devices that are classified in accordance with a prescribed rule, for example, a group in which communication devices that are used by a specified client (tenant) are grouped.

The index value of a load may be expressed, for example, using the reception amount of data per unit time (unit: bps (bit per second)). Moreover, the index value of a load may be expressed, for example, using the number of reception or transmission processes of data per unit time (unit: tps (transaction per second)).

In the example of FIG. 1, the communication device 102 belonging to a group A and the communication device 103 belonging to the group B are illustrated. Herein, assumed is a case where a communication device belonging to a specific group is to be "the communication device 102 belonging to the group A", and an index value of a load for data received from the communication device 102 is calculated.

(2) The information processing device 101 determines whether the calculated index value of the load reaches a prescribed reference. Here, the prescribed reference may be set in any manner, and for example, is set for each specific group (client). For example, a prescribed reference is set to a value that allows a determination that it is better to distribute a load of the information processing device to be requested to process the data received from a communication device belonging to a specific group when the index value of the load reaches the reference.

In the example of FIG. 1, assumed is a case where an index value of a load for data received from the communication device 102 belonging to the group A reaches a prescribed reference.

(3) When the index value of the load reaches the prescribed reference, the information processing device 101 requests a communication device belonging to a specific group to execute a predetermined process in advance. Here, the predetermined process is a process executable also by each communication device belonging to the specific group, out of processes to be executed by an information processing device that is to be requested to process the data received from the communication device belonging to the specific group.

Moreover, requesting the advance execution of the predetermined process is to instruct the communication device belonging to the specific group to execute the predetermined process prior to the information processing device to be requested. In other words, the information processing device 101 causes the communication device, instead of the information processing device to be requested, to execute a process executable also by the communication device belonging to the specific group.

In the example of FIG. 1, the predetermined process is the app APL2 executable by the communication device 102, out of the apps APL2 and APL3 to be executed by the information processing device 106 to be requested to process the data received from the communication device 102 belonging to the group A. In this case, the information processing device 101 requests the communication device 102 belonging to the group A to execute the app APL2 in advance.

In this manner, the information processing device 101 is able to switch, depending on a load for data received from a communication device belonging to a specific group, a request target for a predetermined process (for example, the app APL2) to the communication device belonging to the specific group. This makes it possible to optimize a place at which the data collected by the communication device belonging to the specific group is subjected to the predetermined process, and appropriately distribute the load exerted on the processing of the data collected.

In the example of FIG. 1, when an advance execution of the app APL2 is requested to the communication device 102 belonging to the group A, the communication device 102 executes the app APL2 on the collected data in advance. This makes it possible to reduce the load of the information processing device 106 as a request target for the execution of the app APL2, and distribute the load exerted on the processing of data collected by the communication device 102.

### (System Configuration Example of Process Control System 200)

Next, a system configuration example of a process control system 200 according to the embodiment is described.

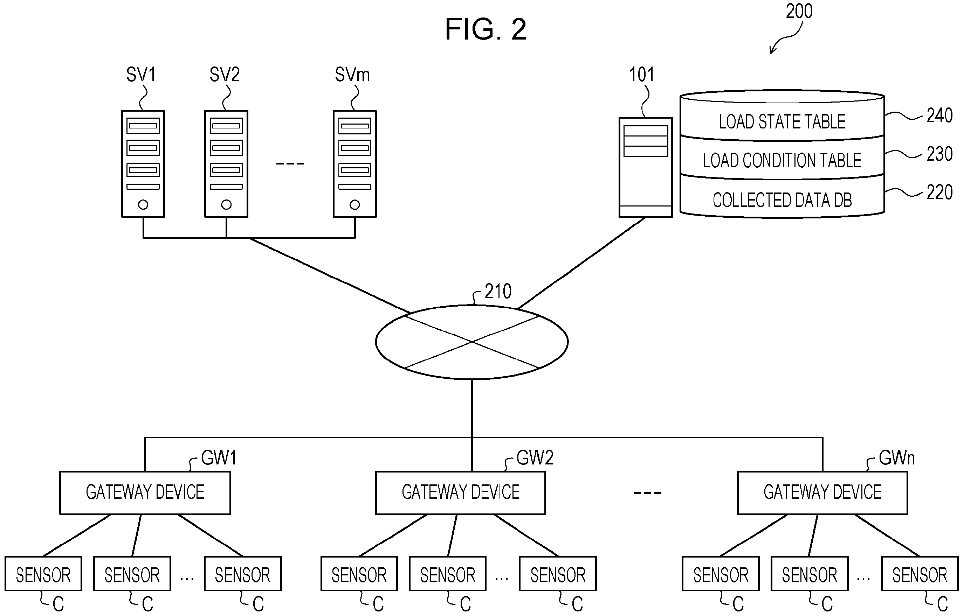

FIG. 2 is an explanation diagram illustrating a system configuration example of the process control system 200. In FIG. 2, the process control system 200 includes the information processing device 101, gateway devices GW1 to GWn (n: natural number of 2 or more), servers SV1 to SVm (m: natural number of 2 or more), and a plurality of sensors C. In the process control system 200, the information processing device 101, the gateway devices GW1 to GWn, and the servers SV1 to SVm are coupled via a wired or wireless network 210. The network 210 is, for example, a local area network (LAN), a wide area network (WAN), or the Internet.

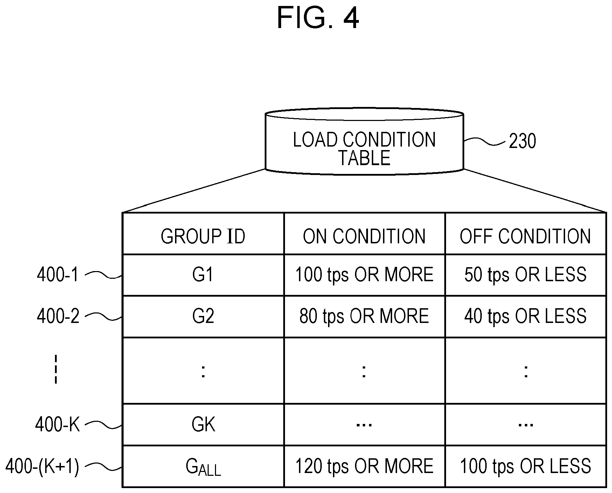

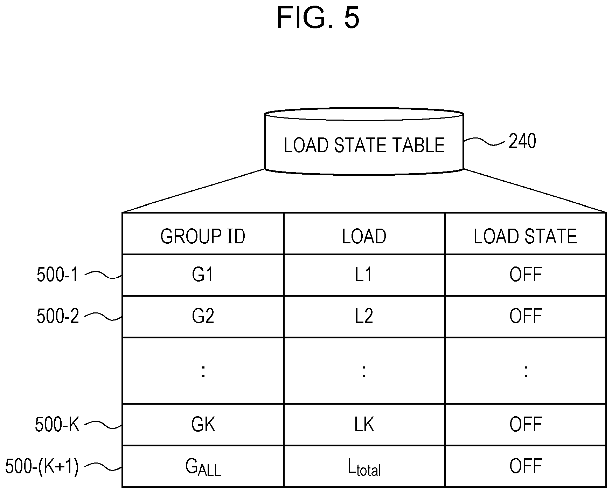

The information processing device 101 includes a collected data database (DB) 220, a load condition table 230, and a load state table 240, and distributes the load exerted on the processing of data that the gateway devices GW1 to GWn collect. The collected data DB 220 stores therein data received from the gateway devices GW1 to GWn. The stored contents of the load condition table 230 and the load state table 240 are described later using FIGs. 4 and 5.

The gateway devices GW1 to GWn are computers that each transmit data collected from the sensors C to the information processing device 101. Each of the gateway devices GW1 to GWn is coupled the sensors C via a wired or wireless network. Each of the gateway devices GW1 to GWn includes the apps APL1 and APL2.

The app APL1 is an app executable by the gateway devices GW1 to GWn, and is, for example, an app that collects data from the sensor C. The app APL2 is an app executable by any of the gateway devices GW1 to GWn and the servers SV1 to SVm, and is, for example, an app that reduces the data amount by thinning-out or calculating the collected data.

For example, the gateway devices GW1 to GWn each may be an access point of the wireless LAN or the Bluetooth (registered trademark), or may be a smartphone, a tablet PC (personal computer), a notebook PC. The communication devices 102 and 103 illustrated in FIG. 1 corresponds to the gateway devices GW1 to GWn, for example.

The sensor C measures, for example, the physical amounts such as the temperature, the humidity, and the luminance in a certain place, and the position, the direction, the speed, and the acceleration of a certain object. The sensor C is, for example, mounted to a wearable terminal, a domestic electric product, a monitor camera, a portable game machine, and the like. The sensors 104 and 105 illustrated in FIG. 1 correspond to the sensors C, for example.

The servers SV1 to SVm are computers that each execute the processing of data requested from the information processing device 101. Each of the servers SV1 to SVm includes the apps APL2 and APL3. The app APL3 is an app executable in all of the servers SV1 to SVm, and is, for example, an app that performs various kinds of analyses and analytical studies relative to data processed by the app APL2. The information processing devices 106 and 107 illustrated in FIG. 1 correspond to the servers SV1 to SVm, for example.

In the following explanation, an arbitrary gateway device, out of the gateway devices GW1 to GWn, is written as "gateway device GWi" (i=1, 2,..., n) in some cases. Moreover, an arbitrary server, out of the servers SV1 to SVm, is written as "server SVj" (j=1, 2,..., m) in some cases.

Each of the gateway devices GW1 to GWn belongs to any group Gk out of groups G1 to GK (K: natural number of 2 or more, k=1, 2,..., K). Each group Gk corresponds to the abovementioned "specific group", for example, a group in which gateway devices GW that are used by a specified client (tenant) are grouped.

### (Hardware Configuration Example of Information Processing Device 101 and Others)

Next, a hardware configuration example of the information processing device 101, the gateway devices GW1 to GWn, and the servers SV1 to SVm illustrated in FIG. 2 is described. For convenience of explanation herein, the information processing device 101, the gateway devices GW1 to GWn, and the servers SV1 to SVm are written as "the information processing device 101 and others".

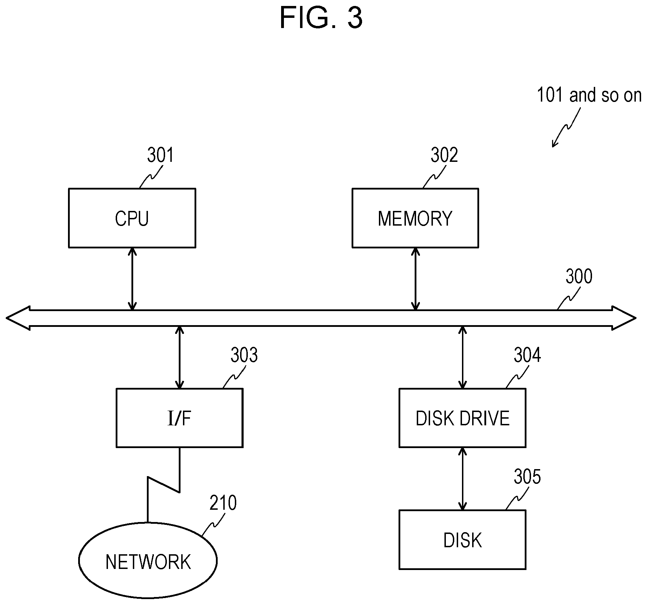

FIG. 3 is a block diagram illustrating a hardware configuration example of the information processing device 101 and others. In FIG. 3, the information processing device 101 and others include a CPU 301, a memory 302, an interface (I/F) 303, a disk drive 304, and a disk 305. Moreover, the constituent units are coupled to one another via a bus 300.

Here, the CPU 301 is in charge of overall control of the information processing device 101 and others. The memory 302 includes, for example, a read only memory (ROM), a random access memory (RAM), a flash ROM, and the like. Specifically, for example, the flash ROM and the ROM store therein various kinds of programs, and the RAM is used as a work area of the CPU 301. The program stored in the memory 302 is loaded on the CPU 301 to cause the CPU 301 to execute a coding process.

The I/F 303 is coupled to the network 210 through a communication channel, and coupled to an external computer via the network 210. Further, the I/F 303 is in charge of an interface between the network 210 and the interior of the device, and controls input/output of data into/from the external computer. As for the I/F 303, for example, a modem or a LAN adaptor is able to be employed.

The disk drive 304 controls read/write from/into the disk 305 under the control by the CPU 301. The disk 305 stores therein data written thereinto due to the control by the disk drive 304. As for the disk 305, for example, a magnetic disk, an optical disk, and the like are employed.

Note that the information processing device 101 and others may include, in addition to the abovementioned constituent units, for example, a solid state drive (SSD), a key board, a mouse, a display, and others.

### (Stored Content of Load Condition Table 230)

Next, the stored content of the load condition table 230 included in the information processing device 101 is described. The load condition table 230 is implemented by, for example, the storage devices such as the memory 302 and the disk 305 of the information processing device 101 illustrated in FIG. 3.

FIG. 4 is an explanation diagram illustrating one example of stored contents of the load condition table 230. In FIG. 4, the load condition table 230 includes fields of a group ID, an ON condition, and an OFF condition, and sets information to each field, thereby storing therein load condition information 400-1 to 400-(K+1) as records.

Here, the group ID is an identifier that uniquely identifies the group Gk. Further, a group ID "ALL" expresses the ID of a group in which all the groups G1 to GK are included. The ON condition is a condition under which the gateway device GWi belonging to the group Gk is requested to execute in advance a process executable also by the gateway device GWi, among processes that the server SVj corresponding to the gateway device GWi is to execute on data collected by the gateway device GWi belonging to the group Gk. The OFF condition is a condition that cancels the ON condition.

Note that in the example of FIG. 4, the ON condition and the OFF condition are set as thresholds based on the number of reception processes of data per unit time (unit: tps), but are not limited thereto. For example, in the load condition table 230, thresholds based on the reception amount of data per unit time (unit: bps) may be set as the ON condition and the OFF condition.

### (Stored Content of Load State Table 240)

Next, the stored content of the load state table 240 included in the information processing device 101 is described. The load state table 240 is implemented by, for example, the storage devices such as the memory 302 and the disk 305 of the information processing device 101.

FIG. 5 is an explanation diagram illustrating one example of stored contents of the load state table 240. In FIG. 5, the load state table 240 includes fields of a group ID, a load, and a load state, and sets information to each field, thereby storing therein load state information 500-1 to 500-(K+1) as records.

Here, the group ID is an identifier that uniquely identifies the group Gk. Further, group ID "ALL" expresses that all the groups G1 to GK are included. The load is an index value of a load for data received from a gateway device GW belonging to the group Gk. The index value of the load is expressed, for example, using the number of reception or transmission processes of data per unit time (unit: tps).

The load state indicates a load state of the group Gk. As the load state, for example, an ON state or an OFF state is set. The ON state is a load state that is set when the ON condition (for example, see FIG. 4) of the group Gk is satisfied. The OFF state is an initial state or a load state that is set when the OFF condition (for example, see FIG. 4) of the group Gk is satisfied.

### (Functional Configuration Example of Information Processing Device 101)

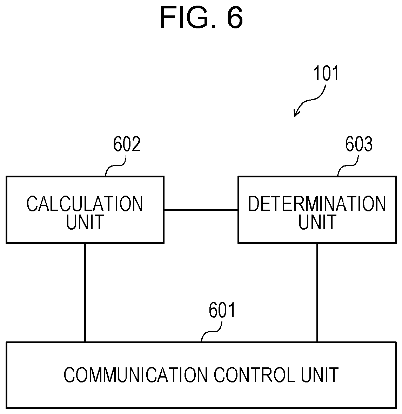

FIG. 6 is a block diagram illustrating a functional configuration example of the information processing device 101. In FIG. 6, the information processing device 101 is configured to include a communication control unit 601, a calculation unit 602, and a determination unit 603. The communication control unit 601 to the determination unit 603 have functions to serve as a control unit, and specifically, for example, the functions are implemented by causing the CPU 301 to execute programs stored in the storage devices such as the memory 302 and the disk 305 illustrated in FIG. 3, or by the I/F 303. A process result by each function unit is stored in the storage device such as the memory 302 or the disk 305, for example.

The communication control unit 601 receives data from the gateway device GWi. The data to be received is, for example, information indicating the physical amount measured by the sensor C coupled to the gateway device GWi. Moreover, for example, information specifying the group Gk to which the gateway device GWi belongs is added to the data to be received.

The information specifying the group Gk may be, for example, a Uniform Resource Locator (URL) of transfer resources that store data. The resource is a unit in which data is accumulated, and for example, is a storage place in which continuous data having one same meaning is stored.

It is possible to access each resource by using, for example, a Hypertext Transfer Protocol (HTTP), a REpresentational State Transfer (REST), or an MQ Telemetry Transport (MQTT).

The information processing device 101 is capable of specifying, for example, the group Gk corresponding to the URL of the transfer resource, as a group Gk to which the gateway device GWi belongs. Further, information indicating a correspondence relation between the URL of the transfer resource and the group Gk is stored, for example, in the storage devices, such as the memory 302 and the disk 305, of the information processing device 101.

Moreover, information specifying the group Gk may be, for example, information identifying the group Gk to which the gateway device GWi belongs, for example, a group ID of the group Gk. In this case, the information processing device 101 is capable of specifying the group Gk to which the gateway device GWi belongs from the group ID added to the received data.

The received data is stored, for example, in the collected data DB 220 illustrated in FIG. 2. More specifically, for example, the received data is stored in a transfer resource (storage place in the collected data DB 220) that is specified from the URL added to the data.

The calculation unit 602 calculates an index value Lk of a load for data received from the gateway device GW belonging to the group Gk, out of the gateway devices GW1 to GWn. Note that as mentioned above, the information specifying the group Gk to which the gateway device GWi belongs is added to the data received from the gateway device GWi.

In the following explanation, an index value Lk of a load for data received from the gateway device GW belonging to the group Gk is written as a "load value Lk of the group Gk" in some cases.

Specifically, for example, the calculation unit 602 may measure the amount of data received per unit time of data received from the gateway device GW belonging to the group Gk, thereby calculating the load value Lk of the group Gk (unit: bps). As one example, assumed is a case where the gateway devices GW1 and GW2 belong to the group G1. In this case, the calculation unit 602 measures the amount of data received per unit time of data received from each of the gateway devices GW1 and GW2, thereby calculating a load value L1 of the group G1.

Moreover, for example, the calculation unit 602 may measure the number of data reception processes (or the number of transmission processes) per unit time of data received from the gateway device GW belonging to the group Gk, thereby calculating the load value Lk of the group Gk (unit: tps). As one example, assumed is a case where the gateway devices GW1 and GW2 belong to the group G1. In this case, the calculation unit 602 measures the number of data reception processes per unit time of data received from each of the gateway devices GW1 and GW2, thereby calculating the load value L1 of the group G1.

The calculated load value Lk of each group Gk is stored in the load state table 240 illustrated in FIG. 5, in association with the group ID of each group Gk, for example.

Moreover, the calculation unit 602 calculates an index value Lₜₒₜₐₗ of a load for data received from at least a gateway device GW belonging to a first group G and a gateway device GW belonging to a second group G, out of the gateway devices GW1 to GWn. As the first and second groups G, any groups may be set. In other words, the index value Lₜₒₜₐₗ of the load may be defined as an index value of the load for the data received from the gateway devices GW belonging to all of two or more groups G, out of the groups G1 to GK.

In the following explanation, the index value Lₜₒₜₐₗ of the load for data received from the gateway devices GW1 to GWn belonging to a group G_{ALL} (in other words, the groups G1 to GK) is written as a "load value Lₜₒₜₐₗ of the group G_{ALL}" in some cases.

Specifically, for example, the calculation unit 602 may measure the amount of data received per unit time of data received from the gateway devices GW1 to GWn belonging to the group G_{ALL}, thereby calculating the load value Lₜₒₜₐₗ of the group G_{ALL} (unit: bps). More specifically, for example, the calculation unit 602 accumulates load values L1 to LK (unit: bps) of all the groups G1 to GK, thereby calculating the load value Lₜₒₜₐₗ of the group G_{ALL} (unit: bps).

Moreover, for example, the calculation unit 602 may measure the number of data reception processes (or the number of transmission processes) per unit time of data received from the gateway devices GW1 to GWn belonging to the group G_{ALL}, thereby calculating the load value Lₜₒₜₐₗ of the group G_{ALL} (unit: tps). More specifically, for example, the calculation unit 602 accumulates the load values L1 to LK (unit: tps) of all the groups G1 to GK, thereby calculating the load value Lₜₒₜₐₗ of the group G_{ALL} (unit: tps).

The calculated load value Lₜₒₜₐₗ of the group G_{ALL} is stored in the load state table 240 illustrated in FIG. 5, in association with the group ID "ALL", for example.

The determination unit 603 determines whether the load value Lk of the group Gk reaches a prescribed reference. The prescribed reference may be set to any value, and for example, may be equivalent to the ON condition in the load condition table 230 illustrated in FIG. 4. Specifically, for example, the determination unit 603 refers to the load condition table 230, and determines whether the calculated load value Lk of the group Gk satisfies the ON condition for the group Gk.

As one example, when the group G1 is employed as an example, the determination unit 603 determines whether the calculated load value L1 of the group G1 satisfies "100 tps or more" of the ON condition for the group Gk. Further, the load value L1 of the group G1 is set as the number of data reception processes (unit: tps) per unit time of data received from the gateway device belonging to the group G1.

The determined determination result is stored in the load state table 240 illustrated in FIG. 5, for example. For example, when it is determined that the load value Lk of the group Gk satisfies the ON condition for the group Gk, the load state for the group Gk is set to "ON".

Moreover, the determination unit 603 determines whether index value Lₜₒₜₐₗ of the load reaches a prescribed reference. Specifically, for example, the determination unit 603 refers to the load condition table 230, and determines whether the calculated the load value Lₜₒₜₐₗ of the group G_{ALL} satisfies the ON condition "120 tps or more" for the group G_{ALL}. Further, the load value Lₜₒₜₐₗ of the group G_{ALL} is set as the number of data reception processes (unit: tps) per unit time of data received from the gateway devices GW1 to GWn belonging to the group G_{ALL}.

The determined determination result is stored in the load state table 240 illustrated in FIG. 5, for example. For example, when it is determined that the load value Lₜₒₜₐₗ of the group G_{ALL} satisfies the ON condition for the group G_{ALL}, the load state for the group G_{ALL} is set to "ON".

When the load value Lk of the group Gk reaches a prescribed reference, the communication control unit 601 requests the gateway device GW belonging to the group Gk to execute a predetermined process in advance. Here, the predetermined process is a process executable by the gateway device GW belonging to the group Gk, out of the processes executed by the server SVj to be requested to process the data received from the gateway device GW belonging to the group Gk.

Specifically, for example, the communication control unit 601 refers to the load state table 240, and transmits, when the load state of the group Gk is "ON", ON information to each gateway device GWi belonging to the group Gk. Here, the ON information is information making notification that the load for the data received by the information processing device 101 reaches a prescribed reference.

In other words, the ON information is equivalent to a request for an advance execution of the app APL2. The app APL2 is, as mentioned above, an application executable also by each gateway device GWi, out of the apps APL2 and APL3 executed by the server SVj as a request target for the data received from each gateway device GWi belonging to the group Gk.

Note that the communication control unit 601 may specify the app APL2 executable also by each gateway device GWi, out of the apps APL2 and APL3 executed by the server SVj as a request target for the data received from each gateway device GWi belonging to the group Gk. Information specifying an app executed by each gateway device GWi or each server SVj is stored in the storage device such as the memory 302 or the disk 305, for example.

Further, when the load state of the group Gk is "ON", the communication control unit 601 may request each gateway device GWi belonging to the group Gk to execute the specified app APL2 in advance. Specifically, for example, the communication control unit 601 may transmit ON information that includes information specifying an app (for example, the app APL2) the advance execution of which is requested, to each gateway device GWi belonging to the group Gk.

Moreover, when the index value Lₜₒₜₐₗ of the load reaches a prescribed reference, the communication control unit 601 requests a gateway device GW belonging to the first group G to execute a first process in advance. In addition, when the index value Lₜₒₜₐₗ of the load reaches a prescribed reference, the communication control unit 601 requests a gateway device GW belonging to the second group G to execute a second process in advance.

Here, the first process is a process executable also by the gateway device GW belonging to the first group G, out of the processes to be executed by the server SVj to be requested to process data received from the gateway device GW belonging to the first group G. Moreover, the second process is a process executable also by the gateway device GW belonging to the second group G, out of the processes to be executed by the server SVj to be requested to process data received from the gateway device GW belonging to the second group G.

Specifically, for example, the communication control unit 601 refers to the load state table 240, and transmits, when the load state of the group G_{ALL} is "ON", ON information to each of the gateway devices GW1 to GWn belonging to the group G_{ALL}. The ON information is, as mentioned above, information making notification that the load for the data received by the information processing device 101 has reached a prescribed reference.

The communication control unit 601 requests the corresponding server SVj to process data received from the gateway device GWi. When the received data is data processed by a process executable also by the gateway device GWi, out of the processes executed by the server SVj, the data is associated with information indicating that the data is already processed.

For example, the received data includes recommendation information indicating whether the data is already processed. The recommendation information in a case of "ON" indicates that the data is already processed. In contrast, the recommendation information in a case of "OFF" indicates that the data is not already processed.

Specifically, for example, the communication control unit 601 specifies an URL of the application programming interface (API) of the server SVj corresponding to the URL of the transfer resource added to the received data. Note that information indicating a correspondence relation between the URL of the transfer resource and the URL of the API is stored in the storage device such as the memory 302 or the disk 305, for example.

Further, the communication control unit 601 designates a URL of the specified API, and transmits the received data. With this, the data received from the gateway device GWi is transferred to the server SVj responsible for the processing of data. As a result, the server SVj calls the API of the designated URL and processes the data.

Specifically, for example, when recommendation information included in data received from the information processing device 101 is "ON", the server SVj stores the data in a database (not illustrated). In contrast, when the recommendation information is "OFF", the server SVj subjects the data to processing by the app APL2, and stores the processed data in a database (not illustrated).

Note that the data accumulated in the database (not illustrated) of the server SVj is used, for example, for execution of the app APL3. Moreover, the execution timing of the app APL3 in the server SVj may be set to any desired timing.

Moreover, the communication control unit 601 may switch the address designated in a request to the server SVj to process data, between an address for the data received before the advance execution of the process is started by the gateway device GWi, and an address for the data received after the advance execution of the process is started by the gateway device GWi.

Specifically, for example, when the URL of the transfer resource added to the received data is the URL of a first transfer resource, the communication control unit 601 specifies the URL of a first API of the server SVj associated with the URL of the first transfer resource. The first transfer resource is a transfer resource in which processed data with the process executed in advance is stored. The first API is an API for storing the data received from the information processing device 101 in a database (not illustrated). Further, the communication control unit 601 designates a URL of the specified first API, and transmits the received data.

Moreover, for example, when the URL of the transfer resource added to the received data is the URL of a second transfer resource, the communication control unit 601 specifies the URL of a second API of the server SVj associated with the URL of the second transfer resource. The second transfer resource is a transfer resource in which data without the process executed in advance is stored. The second API is an API for subjecting the data received from the information processing device 101 to a process of the app APL2. Further, the communication control unit 601 designates a URL of the specified second API, and transmits the received data.

With this, for example, even if data transmitted from the gateway device GWi includes no recommendation information, the server SVj may execute a process on each data according to an execution status of the app APL2.

Moreover, the determination unit 603 determines whether the load value Lk of the group Gk is below a prescribed reference. Here, the prescribed reference may be set to any desired value, and for example, may be equivalent to the OFF condition in the load condition table 230 illustrated in FIG. 4. Specifically, for example, the determination unit 603 refers to the load condition table 230, and determines whether the calculated load value Lk of the group Gk satisfies the OFF condition for the group Gk. As one example, when the group G1 is employed as an example, the determination unit 603 determines whether the calculated load value L1 of the group G1 satisfies "50 tps or more" of the OFF condition for the group Gk.

Moreover, when the load value Lk of the group Gk is below a prescribed reference, the communication control unit 601 requests the gateway device GW belonging to the group Gk to cancel of the advance execution of the predetermined process. Specifically, for example, the communication control unit 601 refers to the load state table 240, and transmits OFF information to each gateway device GWi belonging to the group Gk when the load state of the group Gk is "OFF".

Here, the OFF information is information making notification that the load for the data received by the information processing device 101 is below a prescribed reference. In other words, OFF information is equivalent to the request for the cancellation of the advance execution of the app APL2. With this, in response to a decrease in the load value Lk of the group Gk to a value satisfing the OFF condition for the group Gk, it is possible to cancel the advance execution of the app APL2 requested of each gateway device GWi belonging to the group Gk.

Moreover, the determination unit 603 determines whether the index value Lₜₒₜₐₗ of the load is below a prescribed reference. Specifically, for example, the determination unit 603 refers to the load condition table 230, and determines whether the calculated the load value Lₜₒₜₐₗ of the group G_{ALL} satisfies the OFF condition "100 tps or less" for the group G_{ALL}.

Moreover, when index value Lₜₒₜₐₗ of the load is below a prescribed reference, the communication control unit 601 requests the gateway device GW belonging to the first group Gi to cancel the advance execution of the first process. In addition, when the index value Lₜₒₜₐₗ of the load is below a prescribed reference, the communication control unit 601 requests the gateway device GWi belonging to the second group G to cancel the advance execution of the second process.

Specifically, for example, the communication control unit 601 refers to the load state table 240, and transmits, when the load state of the group G_{ALL} is "OFF", OFF information to each of the gateway devices GW1 to GWn belonging to the group G_{ALL}. With this, in response to a decrease in the load value Lₜₒₜₐₗ of the group G_{ALL} to a value satisfying the OFF condition for the group G_{ALL}, it is possible to cancel the advance execution of the app APL2 requested of each of the gateway devices GW1 to GWn belonging to the group G_{ALL}.

### (Functional Configuration Example of Gateway Device GWi)

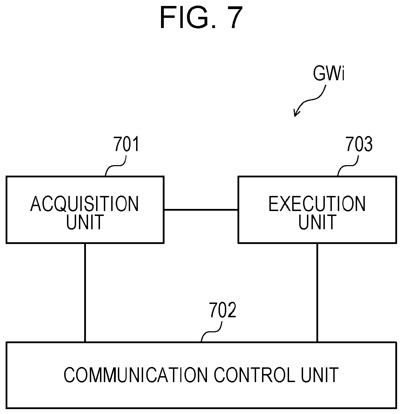

FIG. 7 is a block diagram illustrating a functional configuration example of a gateway device GWi. In FIG. 7, the gateway device GWi is configured to include an acquisition unit 701, a communication control unit 702, and an execution unit 703. The acquisition unit 701 to the execution unit 703 have functions to serve as the control unit, and specifically, for example, the functions are implemented by causing the CPU 301 to execute programs stored in the storage devices such as the memory 302 and the disk 305 illustrated in FIG. 3, or by the I/F 303. A process result by each function unit is stored in the storage device such as the memory 302 or the disk 305, for example.

The acquisition unit 701 acquires data from the sensor C. The acquired data is, for example, information indicating the physical amount measured by the sensor C coupled to the gateway device GWi.

The communication control unit 702 accepts a request to execute in advance a predetermined process from the information processing device 101. Here, the predetermined process is a process executable also by the gateway device GWi, out of the processes to be executed by the server SVj to be requested to process data received from the gateway device GWi by the information processing device 101, and is, for example, the process of the app APL2.

Specifically, for example, the communication control unit 702 receives ON information from the information processing device 101. The ON information is, as mentioned above, information making notification that the load for the data received by the information processing device 101 has reached a prescribed reference. When the ON information is received, "ON" is set to recommendation information of the gateway device GWi.

The recommendation information is information that is written into data to be transmitted to the information processing device 101, and indicates whether the data is already processed. The recommendation information of the gateway device GWi is stored in the storage device such as the memory 302 or the disk 305 of the gateway device GWi illustrated in FIG. 3, for example.

The execution unit 703 subjects the data acquired from the sensor C to a process the advance execution of which is requested from the information processing device 101. Specifically, for example, the execution unit 703 subjects, when recommendation information is "ON", the data acquired from the sensor C to the process of the app APL2. The app APL2 is, for example, an app that reduces the data amount by thinning-out or calculating the data acquired from the sensor C.

Note that, a process (for example, the app APL2) to be executed on the data acquired from the sensor C when recommendation information is "ON" is decided in advance, for example. However, when the ON information from the information processing device 101 includes information specifying a process requested to be executed in advance, the execution unit 703 may execute the specified by the information on the acquired data.

The communication control unit 702 transmits the data acquired from the sensor C to the information processing device 101. Moreover, when the data acquired from the sensor C is subjected to the process requested to be executed in advance, the communication control unit 702 transmits the processed data in association with information indicating that the data is already processed, to the information processing device 101.

Specifically, for example, the communication control unit 702 may write recommendation information into the data acquired from the sensor C or the processed data, and transmit the data including recommendation information indicating whether the data is already processed, to the information processing device 101.

More specifically, for example, the communication control unit 702 designates the URL of the transfer resource, and transmits data including recommendation information. The URL of the transfer resource is stored in the storage device of the gateway device GWi such as the memory 302 or the disk 305, for example.

Moreover, when the communication control unit 702 transmits, for example, processed data after a process requested to be executed in advance, the communication control unit 702 may designate the URL of the first transfer resource, and transmit the data. Moreover, when the communication control unit 702 transmits, for example, data acquired from the sensor C without any change, the communication control unit 702 may designate the URL of the second transfer resource, and transmit the data.

In other words, the communication control unit 702 may switch the address designated in transmission of the data to the information processing device 101 between an address for the data acquired from the sensor C and an address for the processed data after the process requested to be executed in advance. With this, even if data includes no recommendation information, it is possible to determine whether the data is processed data after the process requested to be executed in advance (for example, after the process of the app APL2).

Moreover, the communication control unit 702 accepts a request for cancellation of the advance execution of the predetermined process, from the information processing device 101. Specifically, for example, the communication control unit 702 receives OFF information from the information processing device 101. The OFF information is, as mentioned above, information making notification that the load for the data received by the information processing device 101 is below a prescribed reference. When the OFF information is received, "OFF" is set to recommendation information of the gateway device GWi.

### (Process Control Processing Procedure of Information Processing Device 101)

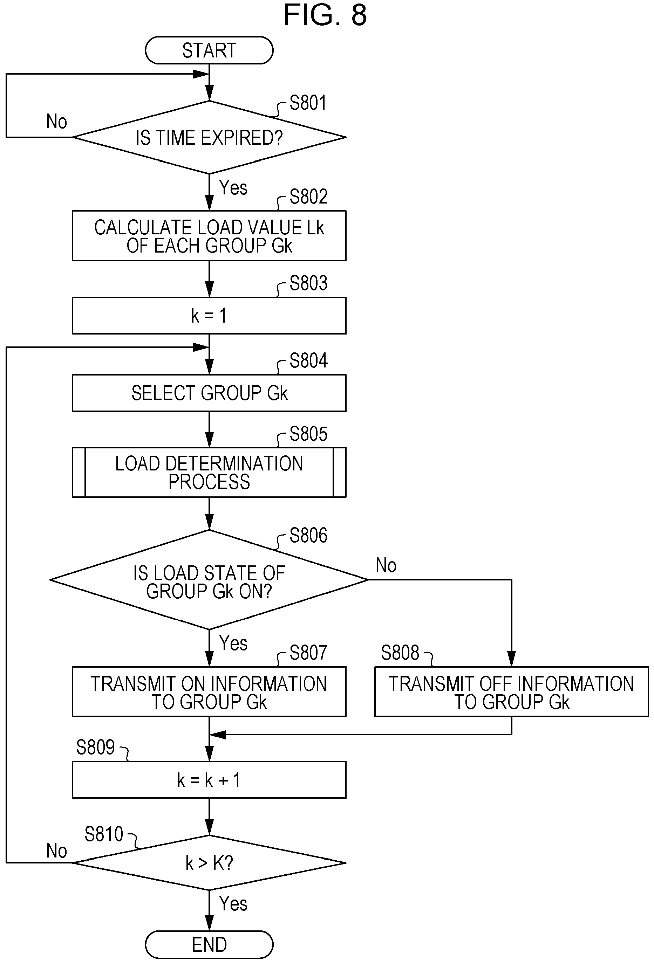

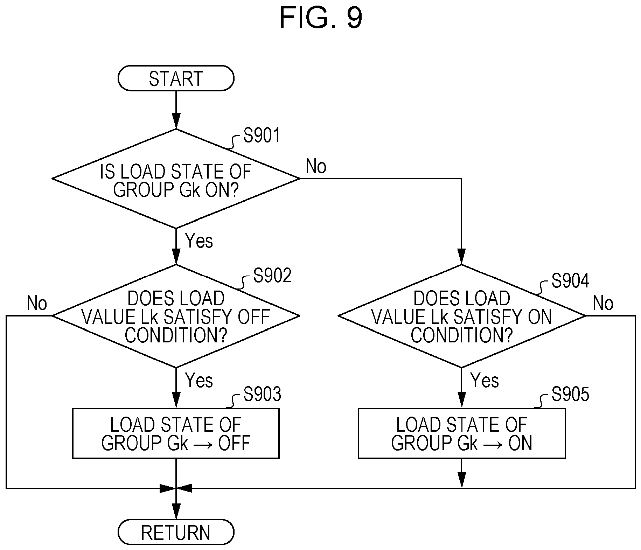

Next, a process control processing procedure of the information processing device 101 is described using FIGs. 8 to 12. Herein, firstly, a first process control processing procedure of the information processing device 101 is described using FIGs. 8 and 9.

FIG. 8 is a flowchart illustrating one example of the first process control processing procedure of the information processing device 101. In the flowchart of FIG. 8, firstly, the information processing device 101 determines whether the timer has expired (step S801). Here, the information processing device 101 waits until the timer is expired (step S801: No).

Note that the expired time of the timer may be set to any desired period, and for example, may be set to a period of about several minutes to several hours. Moreover, the expired time of the timer may be set for each group Gk. Further, the expired time of the timer herein is common to all the groups G1 to GK.

Then, if the timer is expired (step S801: Yes), the information processing device 101 calculates a load value Lk of each group Gk included in the groups G1 to GK (step S802). The calculated load value Lk of each group Gk is stored in the load state table 240, for example.

Note that the load value Lk of each group Gk is calculated, for example, based on information on a load for the data received from a gateway device belonging to the group Gk for a predetermined period (for example, 5 minutes) until the timer is expired.

Next, the information processing device 101 sets "k" of the group Gk as "k=1" (step S803), and selects a group Gk from the groups G1 to GK (step S804). Then, the information processing device 101 executes a load determination process with respect to the selected group Gk (step S805). Note that a specific processing procedure of the load determination process is described later using FIG. 9.

Next, the information processing device 101 refers to the load state table 240, and determines whether the load state of the group Gk is "ON" (step S806). Here, if the load state of the group Gk is "ON" (step S806: Yes), the information processing device 101 transmits ON information to each gateway device GWi belonging to the group Gk (step S807), and shifts the process to a step S809.

On the other hand, if the load state of the group Gk is "OFF" (step S806: No), the information processing device 101 transmits OFF information to each gateway device GWi belonging to the group Gk (step S808). Next, the information processing device 101 increments "k" of the group Gk (step S809).

Then, the information processing device 101 determines whether "k" of the group Gk is greater than "K" (step S810). Here, if "k" is equal to or less than "K" (step S810: No), the information processing device 101 causes the process to return to the step S804. On the other hand, if "k" is greater than "K" (step S810: Yes), the information processing device 101 ends a series of processes based on this flowchart.

With this, in response to turning of the load state of the group Gk to ON, it is possible to request each gateway device GWi belonging to the group Gk to execute a predetermined process (for example, the app APL2) in advance. In contrast, in response to turning of the load state of the group Gk to OFF, it is possible to request each gateway device GWi belonging to the group Gk to cancel the advance execution of the predetermined process.

Next, a specific processing procedure of the load determination process at the step S805 illustrated in FIG. 8 is described.

FIG. 9 is a flowchart illustrating one example of the specific processing procedure of the load determination processing procedure. In the flowchart of FIG. 9, firstly, the information processing device 101 refers to the load state table 240, and determines whether the load state of the group Gk is "ON" (step S901).

Here, if the load state of the group Gk is "ON" (step S901: Yes), the information processing device 101 refers to the load condition table 230, and determines whether the load value Lk of the group Gk satisfies an OFF condition for the group Gk (step S902). The load value Lk of each group Gk is specified from the load state table 240, for example.

Here, if the load value Lk of the group Gk satisfies the OFF condition (step S902: Yes), the information processing device 101 sets the load state of the group Gk in the load state table 240 to "OFF" (step S903), and ends a series of processes based on this flowchart.

On the other hand, if the load value Lk of the group Gk does not satisfy the OFF condition (step S902: No), the information processing device 101 ends a series of processes based on this flowchart.

Moreover, at the step S901, if the load state of the group Gk is "OFF" (step S901: No), the information processing device 101 refers to the load condition table 230, and determines whether the load value Lk of the group Gk satisfies the ON condition for the group Gk (step S904).

Here, if the load value Lk of the group Gk satisfies the ON condition (step S904: Yes), the information processing device 101 sets the load state of the group Gk in the load state table 240 to "ON" (step S905), and ends a series of processes based on this flowchart.

On the other hand, if the load value Lk of the group Gk does not satisfy the ON condition (step S904: No), the information processing device 101 ends a series of processes based on this flowchart.

With this, it is possible to update the load state of the group Gk depending on the load value Lk of the group Gk.

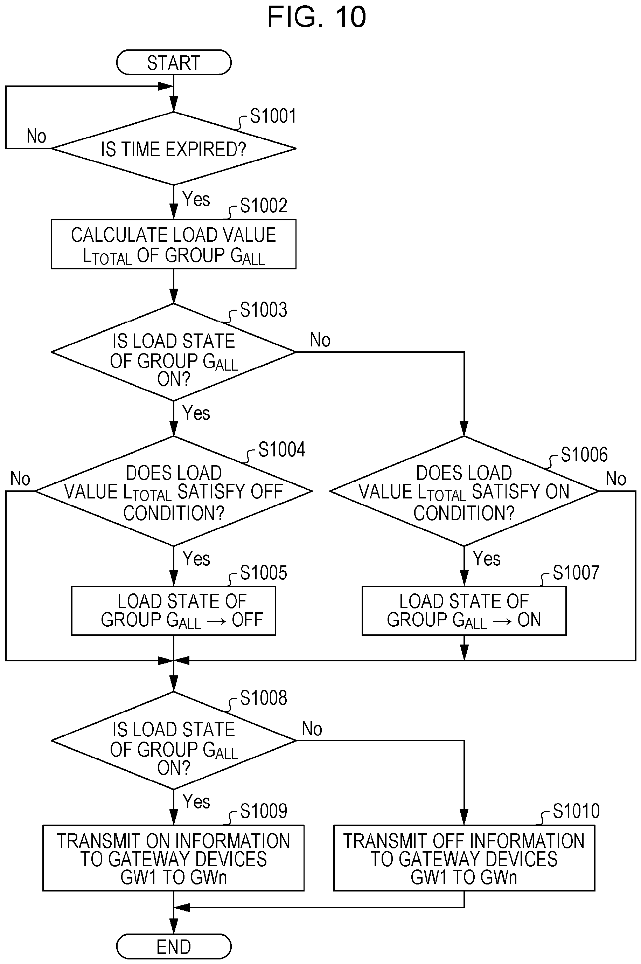

Next, a second process control processing procedure of the information processing device 101 is described using FIG. 10.

FIG. 10 is a flowchart illustrating one example of the second process control processing procedure of the information processing device 101. In the flowchart of FIG. 10, firstly, the information processing device 101 determines whether the timer has expired (step S1001). Here, the information processing device 101 waits until the timer is expired (step S1001: No).

Then, if the timer is expired (step S1001: Yes), the information processing device 101 calculates a load value Lₜₒₜₐₗ of a group G_{ALL} (step S1002). The calculated load value Lₜₒₜₐₗ of the group G_{ALL} is stored in the load state table 240, for example.

Note that the load value Lₜₒₜₐₗ of the group G_{ALL} is calculated, for example, based on information on a load for the data received from the gateway devices GW1 to GWn belonging to the group G_{ALL} for a predetermined period until the timer is expired (for example, 5 minutes).

Next, the information processing device 101 refers to the load state table 240, and determines whether the load state of the group G_{ALL} is "ON" (step S1003).

Here, if the load state of the group G_{ALL} is "ON" (step S1003: Yes), the information processing device 101 refers to the load condition table 230, and determines whether the load value Lₜₒₜₐₗ of the group G_{ALL} satisfies the OFF condition of the group G_{ALL} (step S1004). The load value Lₜₒₜₐₗ of the group G_{ALL} is specified from the load state table 240, for example.

Here, if the load value Lₜₒₜₐₗ of the group G_{ALL} satisfies the OFF condition (step S1004: Yes), the information processing device 101 sets the load state of the group G_{ALL} in the load state table 240 to "OFF" (step S1005), and shifts the process to a step S1008.

On the other hand, if the load value Lₜₒₜₐₗ of the group G_{ALL} does not satisfy the OFF condition (step S1004: No), the information processing device 101 shifts the process to the step S1008.

Moreover, at the step S1003, if the load state of the group G_{ALL} is "OFF" (step S1003: No), the information processing device 101 refers to the load condition table 230, and determines whether the load value Lₜₒₜₐₗ of the group G_{ALL} satisfies the ON condition for the group G_{ALL} (step S1006).

Here, if the load value Lₜₒₜₐₗ of the group G_{ALL} does not satisfy the ON condition (step S1006: No), the information processing device 101 shifts the process to the step S1008. On the other hand, if the load value Lₜₒₜₐₗ of the group G_{ALL} satisfies the ON condition (step S1006: Yes), the information processing device 101 sets the load state of the group G_{ALL} in the load state table 240 to "ON" (step S1007).

Then, the information processing device 101 refers to the load state table 240, and determines whether the load state of the group G_{ALL} is "ON" (step S1008). Here, if the load state of the group G_{ALL} is "ON" (step S1008: Yes), the information processing device 101 transmits ON information to each of the gateway devices GW1 to GWn belonging to the group G_{ALL} (step S1009), and ends a series of processes based on this flowchart.

On the other hand, if the load state of the group G_{ALL} is "OFF" (step S1008: No), the information processing device 101 transmits OFF information to each of the gateway devices GW1 to GWn belonging to the group G_{ALL} (step S1010), and ends a series of processes based on this flowchart.

With this, in response to turning of the load state of the group G_{ALL} to ON, it is possible to request each of the gateway devices GW1 to GWn to execute a predetermined process (for example, the app APL2) in advance. In contrast, in response to turning of the load state of the group G_{ALL} to OFF, it is possible to request each of the gateway devices GW1 to GWn to cancel the advance execution of the predetermined process.

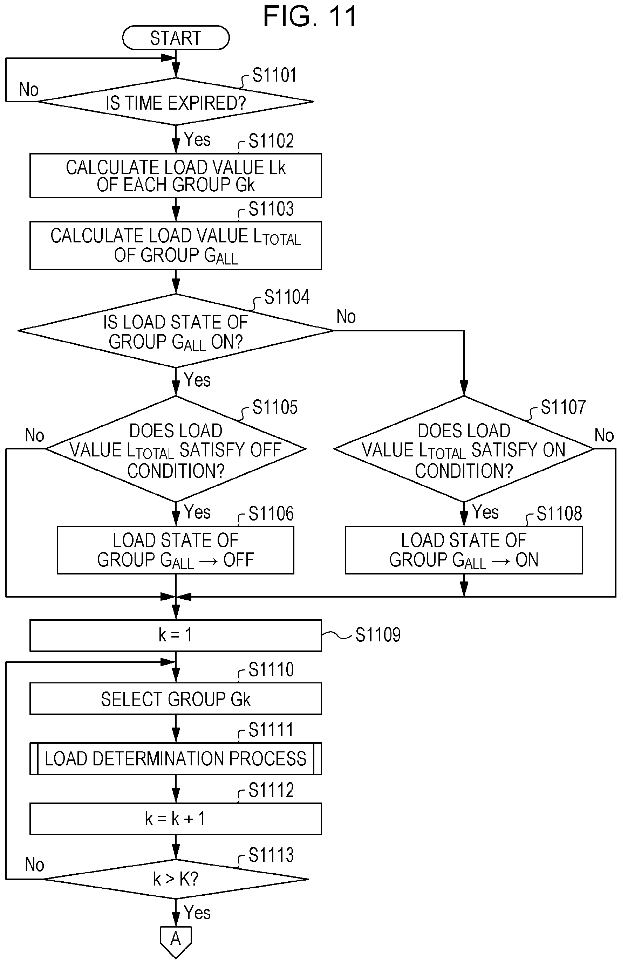

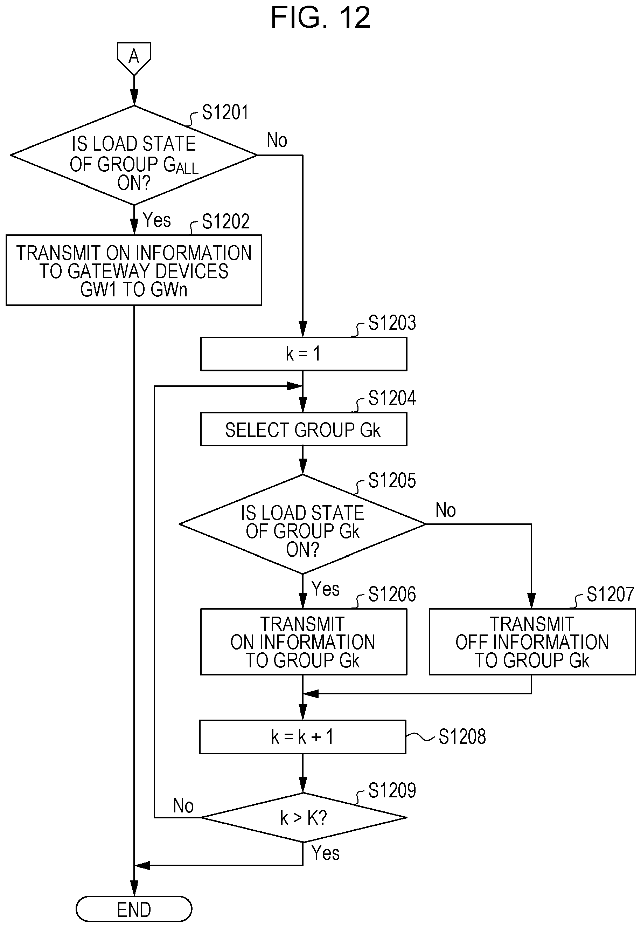

Next, a third process control processing procedure of the information processing device 101 is described using FIGs. 11 and 12.

FIGs. 11 and 12 are flowcharts illustrating one example of the third process control processing procedure of the information processing device 101. In the flowchart of FIG. 11, firstly, the information processing device 101 determines whether the timer has expired (step S1101). Here, the information processing device 101 waits until the timer is expired (step S1101: No).

Then, if the timer is expired (step S1101: Yes), the information processing device 101 calculates a load value Lk of each group Gk included in the groups G1 to GK (step S1102). Next, the information processing device 101 calculates a load value Lₜₒₜₐₗ of the group G_{ALL} (step S1103).

Then, the information processing device 101 refers to the load state table 240, and determines whether the load state of the group G_{ALL} is "ON" (step S1104).

Here, if the load state of the group G_{ALL} is "ON" (step S1104: Yes), the information processing device 101 refers to the load condition table 230, and determines whether the load value Lₜₒₜₐₗ of the group G_{ALL} satisfies the OFF condition of the group G_{ALL} (step S1105).

Here, if the load value Lₜₒₜₐₗ of the group G_{ALL} satisfies the OFF condition (step S1105: Yes), the information processing device 101 sets the load state of the group G_{ALL} in the load state table 240 to "OFF" (step S1106), and shifts the process to a step S1109.

On the other hand, if the load value Lₜₒₜₐₗ of the group G_{ALL} does not satisfy the OFF condition (step S1105: No), the information processing device 101 shifts the process to the step S1109.

Moreover, at the step S1104, if the load state of the group G_{ALL} is "OFF" (step S1104: No), the information processing device 101 refers to the load condition table 230, and determines whether the load value Lₜₒₜₐₗ of the group G_{ALL} satisfies the ON condition for the group G_{ALL} (step S1107).

Here, if the load value Lₜₒₜₐₗ of the group G_{ALL} does not satisfy the ON condition (step S1107: No), the information processing device 101 shifts the process to the step S1109. On the other hand, if the load value Lₜₒₜₐₗ of the group G_{ALL} satisfies the ON condition (step S1107: Yes), the information processing device 101 sets the load state of the group G_{ALL} in the load state table 240 to "ON" (step S1108).

Next, the information processing device 101 sets "k" of the group Gk as "k=1" (step S1109), and selects a group Gk from the groups G1 to GK (step S1110). Then, the information processing device 101 executes a load determination process with respect to the selected group Gk (step S1111).

Note that a specific processing procedure of the load determination process is similar to the specific processing procedure of the load determination process illustrated in FIG. 9, and thus the explanation thereof is omitted.

Next, the information processing device 101 increments "k" of the group Gk (step S1112), and determines whether "k" of the group Gk is greater than "K" (step S1113). Here, if "k" is equal to or less than "K" (step S1113: No), the information processing device 101 causes the process to return to the step S1110.

On the other hand, if "k" is greater than "K" (step S1113: Yes), the information processing device 101 shifts the process to a step S1201 illustrated in FIG. 12.

In the flowchart of FIG. 12, firstly, the information processing device 101 refers to the load state table 240, and determines whether the load state of the group G_{ALL} is "ON" (step S1201). Here, if the load state of the group G_{ALL} is "ON" (step S1201: Yes), the information processing device 101 transmits ON information to each of the gateway devices GW1 to GWn belonging to the group G_{ALL} (step S1202), and ends a series of processes based on this flowchart.

On the other hand, if the load state of the group G_{ALL} is "OFF" (step S1201: No), the information processing device 101 sets "k" of the group Gk to "k=1" (step S1203), and selects a group Gk from the groups G1 to GK (step S1204). Then, the information processing device 101 refers to the load state table 240, and determines whether the load state of the group Gk is "ON" (step S1205).

Here, if the load state of the group Gk is "ON" (step S1205: Yes), the information processing device 101 transmits ON information to each gateway device GWi belonging to the group Gk (step S1206), and shifts the process to a step S1208.

On the other hand, if the load state of the group Gk is "OFF" (step S1205: No), the information processing device 101 transmits OFF information to each gateway device GWi belonging to the group Gk (step S1207). Next, the information processing device 101 increments "k" of the group Gk (step S1208).

Then, the information processing device 101 determines whether "k" of the group Gk is greater than "K" (step S1209). Here, if "k" is equal to or less than "K" (step S1209: No), the information processing device 101 causes the process to return to the step S1204. On the other hand, if "k" is greater than "K" (step S1209: Yes), the information processing device 101 ends a series of processes based on this flowchart.

With this, it is possible to switch the gateway devices GW to be requested to execute in advance the process to the range of the gateway devices GW belonging to the group Gk when the case where the load value Lk of the group Gk satisfies the ON condition for the group Gk, or to the range of the gateway devices GW1 to GWn when the load value Lₜₒₜₐₗ of the group G_{ALL} satisfies the ON condition for the group G_{ALL}.

### (Process Control Processing Procedure of Gateway Device Gwi)

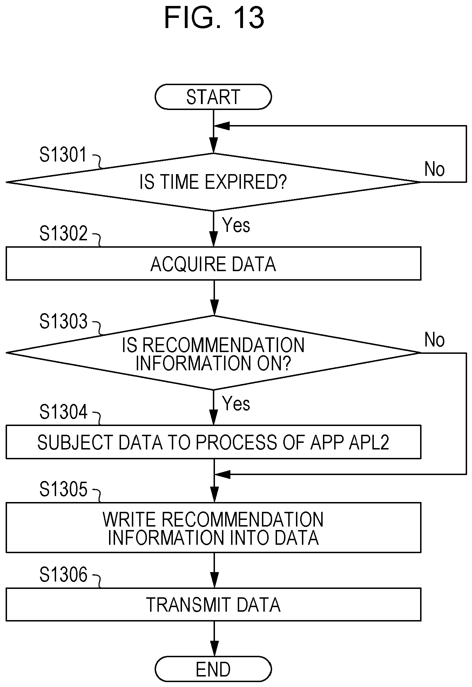

Next, a process control processing procedure of a gateway device GWi is described using FIG. 13.

FIG. 13 is a flowchart illustrating one example of the process control processing procedure of the gateway device GWi. In the flowchart of FIG. 13, firstly, the gateway device GWi determines whether the timer has expired (step S1301). Here, the gateway device GWi waits until the timer is expired (step S1301: No).

Then, if the timer is expired (step S1301: Yes), the gateway device GWi acquires data from a sensor C coupled to the own device (step S1302). Next, the gateway device GWi determines whether recommendation information is "ON" (step S1303).

Here, if the recommendation information is "OFF" (step S1303: No), the gateway device GWi shifts the process to a step S1305. On the other hand, if the recommendation information is "ON" (step S1303: Yes), the gateway device GWi subjects the acquired data to the process of the app APL2 (step S1304).

Next, the gateway device GWi writes recommendation information into data to be transmitted (step S1305). The data to be transmitted is data acquired from the sensor C or processed data that is data processed by the app APL2.

Then, the gateway device GWi transmits data including the recommendation information to the information processing device 101 (step S1306), and ends a series of processes based on this flowchart. With this, in response to a request to execute in advance the app APL2 from the information processing device 101, it is possible to subject data acquired from the sensor C to the process of the app APL2.

### (Process Control Processing Procedure of Server Svj)

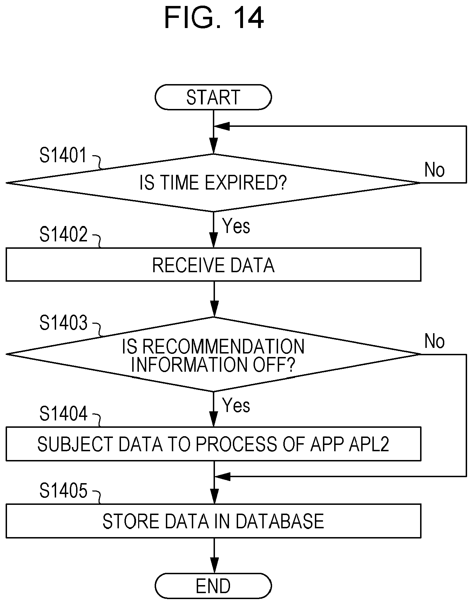

Next, a process control processing procedure of a server SVj is described using FIG. 14.

FIG. 14 is a flowchart illustrating one example of the process control processing procedure of the server SVj. In the flowchart of FIG. 14, firstly, the server SVj determines whether the timer is expired (step S1401). Here, the server SVj waits until the timer is expired (step S1401: No).

Then, if the timer is expired (step S1401: Yes), the server SVj receives data from the information processing device 101 (step S1402). Next, the server SVj determines whether recommendation information included in the received data is "OFF" (step S1403).

Here, if the recommendation information is "OFF" (step S1403: Yes), the server SVj subjects the received data to the process of the app APL2 (step S1404). Then, the server SVj stores the processed data, that is, the data processed by the app APL2 in a database (not illustrated) (step S1405), and ends a series of processes based on this flowchart.

On the other hand, at the step S1403, if the recommendation information is "ON", (step S1403: No), the server SVj stores the received data in the database (not illustrated) (step S1405), and ends a series of processes based on this flowchart. With this, it is possible to reduce the load of the server SVj for the execution of the app APL2.

As described in the forgoing, with the information processing device 101 according to the embodiment, it is possible to calculate an index value Lk (a load value Lk of a group Gk) of a load for data received from a gateway device GW belonging to the group Gk. The load value Lk of the group Gk is expressed by the reception amount of data per unit time and/or the number of reception processes of data (or the number of transmission processes) per unit time. Further, with the information processing device 101, when the load value Lk of the group Gk reaches a prescribed reference, it is possible to request the gateway device GW belonging to the group Gk to execute a predetermined process in advance. The predetermined process is a process (for example, the app APL2) executable also by the gateway device GW belonging to the group Gk, out of the processes to be executed by a server SVj to be requested to process data received from the gateway device GW belonging to the group Gk.

This makes it possible to switch the request target for the predetermined process (for example, the app APL2) from the server SVj to the gateway device GW belonging to the group Gk, depending on the load value Lk of the group Gk. As a result, it is possible to optimize a place at which data collected by the gateway device GW belonging to the group Gk is subjected to the predetermined process, and appropriately distribute the load exerted on the processing of collected data.

Moreover, with the information processing device 101, it is possible to calculate an index value Lₜₒₜₐₗ (load value Lₜₒₜₐₗ of a group G_{ALL}) of the load for data received from gateway devices GW1 to GWn belonging to the group G_{ALL}. Further, with the information processing device 101, when the load value Lₜₒₜₐₗ of the group G_{ALL} reaches a prescribed reference, it is possible to request the gateway devices GW1 to GWn belonging to the group G_{ALL} to execute a predetermined process in advance.

With this, it is possible to switch a request target for the predetermined process (for example, the app APL2) from the servers SVj to the gateway devices GW belonging to all the groups G1 to GK depending on the load value Lₜₒₜₐₗ of the group G_{ALL} (overall system).

Moreover, with the information processing device 101, it is possible to switch a range of gateway devices GWs as request targets for advance execution of the predetermined process to a range of the gateway devices GW belonging to the group Gk when the load value Lk of the group Gk satisfies a prescribed reference, or to a range of the gateway devices GW1 to GWn when the load value Lₜₒₜₐₗ of the group G_{ALL} satisfies a prescribed reference.

This makes it possible to distribute the load for the processing of data collected by all the gateway devices GW1 to GWn, if the load value Lₜₒₜₐₗ of the system as a whole reaches a threshold, even though the load value Lk of each group Gk does not reach a threshold. On the other hand, even though the load value Lₜₒₜₐₗ of the system as a whole does not reach a threshold, if a load value Lk of a certain group Gk reaches a threshold, it is possible to distribute the load for the processing of data collected by the gateway device GW belonging to the certain group Gk.

Moreover, with the information processing device 101, it is possible to switch the address designated in a request to the server to process data, between the address for the data received before the advance execution of the process is started by the gateway device GWi and the address for the data received after the advance execution of the process is started by the gateway device GWi. With this, even if data transmitted from the gateway device GWi includes no information (for example, recommendation information) indicating whether the data is already processed, the server SVj may execute a process on each data according to an execution status of the app APL2.

Moreover, with the information processing device 101, when the load value Lk of the group Gk is below a prescribed reference, it is possible to request the gateway device GW belonging to the group Gk to cancel the advance execution of the predetermined process. This makes it possible to return a place at which the collected data is subjected to the predetermined process to the server side in response to a decrease in the load value Lk of the group Gk, and utilize the resource of the server SVj.

Moreover, with the information processing device 101, when the load value Lₜₒₜₐₗ of the group G_{ALL} is below a prescribed reference, it is possible to request the gateway devices GW1 to GWn to cancel the advance execution of the predetermined process. This makes it possible to return a place at which the collected data is subjected to the predetermined process to the server side in response to a decrease in the load value Lₜₒₜₐₗ of the system as a whole, and to utilize the resources of the servers SV1 to SVm.

Moreover, with the gateway device GWi according to the embodiment, when a request to execute a predetermined process in advance is received from the information processing device 101, it is possible to subject the collected data to the predetermined process, and transmit the processed data in association with information indicating that the data is already processed to the information processing device 101. This allows the server SVj, which is requested to process data transmitted from the gateway device GWi, to determine whether the data is already processed, and execute a process on the data according to an execution status of the predetermined process (for example, the app APL2).

Note that the process control method having been explained in the present embodiment may be implemented such that a computer such as a personal computer or a work station executes a prepared program in advance. The process control program is recorded on a computer-readable recording medium such as a hard disk, a flexible disk, a CD-ROM, a MO, or a DVD, and is executed such that the computer reads the process control program from the recording medium. Moreover, the process control program may be distributed via a network such as the Internet.

### Reference Signs List

101 INFORMATION PROCESSING DEVICE
102, 103 COMMUNICATION DEVICE
104, 105, C SENSOR
106, 107 INFORMATION PROCESSING DEVICE
200 PROCESS CONTROL SYSTEM
220 COLLECTED DATA DB
230 LOAD CONDITION TABLE
240 LOAD STATE TABLE
601, 702 COMMUNICATION CONTROL UNIT
602 CALCULATION UNIT
603 DETERMINATION UNIT
701 ACQUISITION UNIT
703 EXECUTION UNIT
GW1 to GWn, GWi GATEWAY DEVICE
SV1 to SVm, SVj SERVER

## Claims

1. A computer-readable storage medium storing a process control program that causes a computer (101), coupled to a plurality of communication devices (102, 103) and one or more information processing devices (106, 107), to execute a control process comprising:
receiving data from each of the plurality of communication devices that are grouped into one or more groups and transmit respective collected data;
requesting a corresponding information processing device (106, 107) to process the received data;
calculating an index value of a load for data received from communication devices belonging to a specific group among the one or more groups, and
when the calculated index value reaches a prescribed reference, requesting the communication devices belonging to the specific group to execute in advance a process (APL2) executable by each communication device belonging to the specific group, out of processes (APL2, APL3) to be executed by the corresponding information processing device (106, 107) that is to be requested to process the data received from the communication devices belonging to the specific group and to transmit the data thus processed in association with information indicating that the data has already been processed to the computer (101).

2. The storage medium according to claim 1, wherein the control process further comprising:
when a first index value of a load for data received from communication devices belonging to a first group and a second index value of a load from communication devices belonging to a second group reach the prescribed reference, requesting the communication devices belonging to the first group to execute in advance a first process executable by each communication device belonging to the first group out of processes to be executed by the information processing device (106, 107) that is to be requested to process the data received from the communication devices belonging to the first group, and requesting communications device belonging to the second group to execute in advance a second process executable by each communication device belonging to the second group out of processes to be executed by the information processing device (106, 107) that is to be requested to process the data received from the communication devices belonging to the second group.

3. The storage medium according to claim 2, wherein the control process further comprising:
when an index value of a total load for data received from communication devices belonging to a specific number of groups reaches a specific threshold, requesting the communication devices belonging to the specific number of groups to execute in advance a process executable by each communication device belonging to the specific number of groups out of processes to be executed by the information processing device (106, 107) that is to be requested to process the data received from the communication devices belonging to the specific number of groups.

4. The storage medium according to any one of claims 1 to 3, wherein the control process further comprising:
switching an address designated in a request to the information processing device (106, 107) to process data, between an address for the data received before the advance execution of the process is started, and an address for data received after the advance execution of the process is started.

5. The storage medium according to any one of claims 1 to 4, wherein the index value is a reception amount of the data per unit time and/or the number of reception or transmission processes of the data per unit time.

6. The storage medium according to claim 1, wherein the control process further comprising
requesting the communication devices belonging to the specific group to cancel the advance execution of the process, when the index value of the load for the data received from the communication devices belonging to the specific group is below the prescribed reference.

7. The storage medium according to claim 2, wherein the control process further comprising
requesting the communication devices belonging to the first group to cancel the advance execution of the first process when the first index value is below the prescribed reference, and
requesting the communication devices belonging to the second group to cancel the advance execution of the second process, when the index value of the load is below the prescribed reference.

8. A process control method executed by a computer (101), coupled to a plurality of communication devices (102, 103) and one or more information processing devices (106, 107), the method comprising:
receiving data from each of the plurality of communication devices that are grouped into one or more groups and transmit respective collected data;
requesting a corresponding information processing device (106, 107) to process the received data;
calculating an index value of a load for data received from communication devices belonging to a specific group among the one or more groups, and
when the calculated index value reaches a prescribed reference, requesting the communication devices belonging to the specific group to execute in advance a process (APL2) executable by each communication device belonging to the specific group, out of processes (APL2, APL3) to be executed by the corresponding information processing device (106, 107) that is to be requested to process the data received from the communication devices belonging to the specific group and to transmit the data thus processed in association with information indicating that the data has already been processed to the computer (101).

9. The process control method according to claim 8, wherein the method further comprising:
when an index value of a load for data received from communication devices belonging to at least a first group and a second group among the one or more groups reaches a prescribed reference, requesting the communication devices belonging to the first group to execute in advance a first process executable by each communication device belonging to the first group out of processes to be executed by the information processing device (106, 107) that is to be requested to process the data received from the communication devices belonging to the first group, and requesting the communication devices belonging to the second group to execute in advance a second process executable by each communication device belonging to the second group out of processes to be executed by the information processing device (106, 107) that is to be requested to process the data received from the communication devices belonging to the second group.

10. The process control method according to claim 8, wherein the method further comprising:
performing control of switching a range of communication devices to be requested to execute in advance a process that the information processing device (106, 107) is to be requested to execute, to a range of communication devices belonging to a specific group among the plurality of communication devices when an index value of a first load for data received from a communication device belonging to the specific group reaches a first threshold, or to a range of communication devices belonging to different groups among the plurality of communication devices when an index value of a second load for data received from communication devices belonging to the different groups reaches a second threshold.

11. An information processing device (101) comprising a control unit (301), configured to:
receive data from each of a plurality of communication devices (102, 103) that are grouped into one or more groups and transmit respective collected data;
request a corresponding information processing device (106, 107) to process the received data;
calculate an index value of a load for data received from communication devices belonging to a specific group among the one or more groups, and
when the calculated index value reaches a prescribed reference, request the communication devices belonging to the specific group to execute in advance a process (APL2) executable by each communication device belonging to the specific group, out of processes (APL2, APL3) to be executed by the corresponding information processing device (106, 107) that is to be requested to process the data received from the communication devices belonging to the specific group and to transmit the data thus processed in association with information indicating that the data has already been processed to the control unit (301).

12. The information processing device (101) according to claim 11, further configured to:
when an index value of a load for data received from communication devices belonging to at least a first group and a second group among the one or more groups reaches a prescribed reference, request the communication devices belonging to the first group to execute in advance a first process executable by each communication device belonging to the first group out of processes to be executed by the information processing device (106, 107) that is to be requested to process the data received from the communication devices belonging to the first group, and request the communication devices belonging to the second group to execute in advance a second process executable by each communication device belonging to the second group out of processes to be executed by the information processing device (106, 107) that is to be requested to process the data received from the communication devices belonging to the second group.

13. The information processing device (101) according to claim 11, further configured to:
perform control of switching a range of communication devices to be requested to execute in advance a process that the information processing device (106, 107) is to be requested to execute, to a range of communication devices belonging to a specific group among the plurality of communication devices when an index value of a first load for data received from a communication device belonging to the specific group reaches a first threshold, or to a range of communication devices belonging to different groups among the plurality of communication devices when an index value of a second load for data received from communication devices belonging to the different groups reaches a second threshold.

## Patentansprüche

1. Computerlesbares Speichermedium, das ein Prozesssteuerungsprogramm speichert, das einen Computer (101), der mit einer Vielzahl von Kommunikationsvorrichtungen (102, 103) und einer oder mehreren Informationsverarbeitungsvorrichtungen (106, 107) gekoppelt ist, veranlasst, einen Steuerprozess auszuführen, der Folgendes umfasst:
Empfangen von Daten von jedem der Vielzahl von Kommunikationsgeräten, die in einer oder mehreren Gruppen gruppiert sind, und Senden der jeweiligen gesammelten Daten;
Auffordern einer entsprechenden Informationsverarbeitungsvorrichtung (106, 107), die empfangenen Daten zu verarbeiten;
Berechnen eines Indexwertes einer Last für Daten, die von Kommunikationsvorrichtungen empfangen werden, die zu einer bestimmten Gruppe unter der einen oder den mehreren Gruppen gehören, und
wenn der berechnete Indexwert eine vorgeschriebene Referenz erreicht, Auffordern der Kommunikationsvorrichtungen, die zu der bestimmten Gruppe gehören, im Voraus einen Prozess (APL2) auszuführen, der von jeder Kommunikationsvorrichtung ausgeführt werden kann, die zu der bestimmten Gruppe gehört, aus den Prozessen (APL2, APL3), die von der entsprechenden Informationsverarbeitungsvorrichtung (106, 107) auszuführen sind, die aufgefordert werden soll, die von den Kommunikationsvorrichtungen, die zu der spezifischen Gruppe gehören, empfangenen Daten zu verarbeiten und die so verarbeiteten Daten in Verbindung mit Informationen, die angeben, dass die Daten bereits verarbeitet wurden, an den Computer (101) zu senden.

2. Speichermedium nach Anspruch 1, wobei der Steuerprozess weiter umfasst:
wenn ein erster Indexwert einer Last für Daten, die von Kommunikationsvorrichtungen, die zu einer ersten Gruppe gehören, empfangen werden, und ein zweiter Indexwert einer Last von Kommunikationsvorrichtungen, die zu einer zweiten Gruppe gehören, die vorgeschriebene Referenz erreichen, Auffordern der Kommunikationsvorrichtungen, die zu der ersten Gruppe gehören, im Voraus einen ersten Prozess auszuführen, der von jeder Kommunikationsvorrichtung, die zu der ersten Gruppe gehört, aus den Prozessen ausgeführt werden kann, die von der Informationsverarbeitungsvorrichtung (106, 107) auszuführen sind, die zur Verarbeitung der von den zur ersten Gruppe gehörenden Kommunikationsvorrichtungen empfangenen Daten angefordert werden soll, und Auffordern der zu der zweiten Gruppe gehörenden Kommunikationsvorrichtungen, im Voraus einen zweiten Prozess auszuführen, der von jeder zu der zweiten Gruppe gehörenden Kommunikationsvorrichtung aus den von der Informationsverarbeitungsvorrichtung (106, 107) auszuführenden Prozessen ausgeführt werden kann, die zur Verarbeitung der von den zu der zweiten Gruppe gehörenden Kommunikationsvorrichtungen empfangenen Daten aufgefordert werden soll.

3. Speichermedium nach Anspruch 2, wobei der Steuerprozess weiter umfasst:
wenn ein Indexwert einer Gesamtlast für Daten, die von Kommunikationsvorrichtungen, die zu einer bestimmten Anzahl von Gruppen gehören, empfangen werden, einen bestimmten Schwellenwert erreicht, Auffordern der Kommunikationsvorrichtungen, die zu der bestimmten Anzahl von Gruppen gehören, im Voraus einen Prozess auszuführen, der von jeder Kommunikationsvorrichtung, die zu der bestimmten Anzahl von Gruppen gehört, aus den Prozessen ausgeführt werden kann, die von der Informationsverarbeitungsvorrichtung (106, 107) auszuführen sind, die aufgefordert werden soll, die von den Kommunikationsvorrichtungen, die zu der bestimmten Anzahl von Gruppen gehören, empfangenen Daten zu verarbeiten.

4. Speichermedium nach einem der Ansprüche 1 bis 3, wobei der Steuerprozess weiter umfasst:
Umschalten einer Adresse, die in einer Anforderung an die Informationsverarbeitungsvorrichtung (106, 107) zur Verarbeitung von Daten designiert ist, zwischen einer Adresse für die Daten, die vor dem Beginn der Vorabausführung des Prozesses empfangen wurden, und einer Adresse für Daten, die nach dem Beginn der Vorabausführung des Prozesses empfangen wurden.

5. Speichermedium nach einem der Ansprüche 1 bis 4, wobei der Indexwert eine Empfangsmenge der Daten pro Zeiteinheit und/oder die Anzahl der Empfangs- oder Sendeprozesse der Daten pro Zeiteinheit ist.

6. Speichermedium nach Anspruch 1, wobei der Steuerprozess weiter umfasst
Auffordern der zu der spezifischen Gruppe gehörenden Kommunikationsvorrichtungen, die Vorabausführung des Prozesses abzubrechen, wenn der Indexwert der Last für die von den zu der spezifischen Gruppe gehörenden Kommunikationsvorrichtungen empfangenen Daten unter der vorgeschriebenen Referenz liegt.

7. Speichermedium nach Anspruch 2, wobei der Steuerprozess weiter umfasst
Auffordern der zur ersten Gruppe gehörenden Kommunikationsvorrichtungen, die Vorabausführung des ersten Prozesses abzubrechen, wenn der erste Indexwert unter der vorgeschriebenen Referenz liegt, und
Auffordern der zur zweiten Gruppe gehörenden Kommunikationsvorrichtungen, die Vorabausführung des zweiten Prozesses abzubrechen, wenn der Indexwert der Last unter der vorgeschriebenen Referenz liegt.

8. Prozesssteuerungsverfahren, das von einem Computer (101) ausgeführt wird, der mit einer Vielzahl von Kommunikationsvorrichtungen (102, 103) und einer oder mehreren Informationsverarbeitungsvorrichtungen (106, 107) gekoppelt ist, wobei das Verfahren umfasst:
Empfangen von Daten von jedem der Vielzahl von Kommunikationsgeräten, die in einer oder mehreren Gruppen gruppiert sind, und Senden der jeweiligen gesammelten Daten;
Auffordern einer entsprechenden Informationsverarbeitungsvorrichtung (106, 107), die empfangenen Daten zu verarbeiten;
Berechnen eines Indexwertes einer Last für Daten, die von Kommunikationsvorrichtungen empfangen werden, die zu einer bestimmten Gruppe unter der einen oder den mehreren Gruppen gehören, und
wenn der berechnete Indexwert eine vorgeschriebene Referenz erreicht, Auffordern der Kommunikationsvorrichtungen, die zu der bestimmten Gruppe gehören, im Voraus einen Prozess (APL2) auszuführen, der von jeder Kommunikationsvorrichtung ausgeführt werden kann, die zu der bestimmten Gruppe gehört, aus den Prozessen (APL2, APL3), die von der entsprechenden Informationsverarbeitungsvorrichtung (106, 107) auszuführen sind, die aufgefordert werden soll, die von den Kommunikationsvorrichtungen, die zu der spezifischen Gruppe gehören, empfangenen Daten zu verarbeiten und die so verarbeiteten Daten in Verbindung mit Informationen, die angeben, dass die Daten bereits verarbeitet wurden, an den Computer (101) zu senden.

9. Prozesssteuerungsverfahren nach Anspruch 8, wobei das Verfahren weiter umfasst:
wenn ein Indexwert einer Last für Daten, die von Kommunikationsvorrichtungen empfangen werden, die zu mindestens einer ersten Gruppe und einer zweiten Gruppe unter der einen oder den mehreren Gruppen gehören, eine vorgeschriebenen Referenz erreicht, Auffordern der Kommunikationsvorrichtungen, die zu der ersten Gruppe gehören, im Voraus einen ersten Prozess auszuführen, der von jeder Kommunikationsvorrichtung, die zu der ersten Gruppe gehört, aus den Prozessen ausgeführt werden kann, die von der Informationsverarbeitungsvorrichtung (106, 107) auszuführen sind, die zur Verarbeitung der von den Kommunikationsvorrichtungen, die zur ersten Gruppe gehören, empfangenen Daten angefordert werden soll, und Auffordern der zu der zweiten Gruppe gehörenden Kommunikationsvorrichtungen, im Voraus einen zweiten Prozess auszuführen, der von jeder zu der zweiten Gruppe gehörenden Kommunikationsvorrichtung aus den von der Informationsverarbeitungsvorrichtung (106, 107) auszuführenden Prozessen ausgeführt werden kann, die aufgefordert werden soll, die von den zu der zweiten Gruppe gehörenden Kommunikationsvorrichtungen empfangenen Daten zu verarbeiten.

10. Prozesssteuerungsverfahren nach Anspruch 8, wobei das Verfahren weiter umfasst:
Durchführen einer Steuerung des Umschaltens eines Bereichs von Kommunikationsvorrichtungen, die aufgefordert werden sollen, im Voraus einen Prozess auszuführen, dessen Ausführung von der Informationsverarbeitungsvorrichtung (106, 107) angefordert werden soll, auf einen Bereich von Kommunikationsvorrichtungen, die zu einer spezifischen Gruppe unter der Vielzahl von Kommunikationsvorrichtungen gehören, wenn ein Indexwert einer ersten Last für Daten, die von einer Kommunikationsvorrichtung empfangen werden, die zu der spezifischen Gruppe gehört, einen ersten Schwellenwert erreicht, oder auf einen Bereich von Kommunikationsvorrichtungen, die zu verschiedenen Gruppen unter der Vielzahl von Kommunikationsvorrichtungen gehören, wenn ein Indexwert einer zweiten Last für Daten, die von Kommunikationsvorrichtungen empfangen werden, die zu den verschiedenen Gruppen gehören, einen zweiten Schwellenwert erreicht.

11. Informationsverarbeitungsvorrichtung (101), umfassend eine Steuereinheit (301), die konfiguriert ist, um:
Daten von jeder einer Vielzahl von Kommunikationsvorrichtungen (102, 103) zu empfangen, die in einer oder mehreren Gruppen gruppierten sind, und die jeweils gesammelten Daten zu senden;
eine entsprechende Informationsverarbeitungsvorrichtung (106, 107) aufzufordern, die empfangenen Daten zu verarbeiten;
einen Indexwert einer Last für Daten zu berechnen, die von Kommunikationsvorrichtungen empfangen werden, die zu einer spezifischen Gruppe unter der einen oder mehreren Gruppen gehören, und
wenn der berechnete Indexwert eine vorgeschriebene Referenz erreicht, die Kommunikationsvorrichtungen, die zu der spezifischen Gruppe gehören, aufzufordern, im Voraus einen Prozess (APL2) auszuführen, der von jeder Kommunikationsvorrichtung, die zu der spezifischen Gruppe gehört, ausgeführt werden kann, und zwar aus den Prozessen (APL2, APL3), die von der entsprechenden Informationsverarbeitungsvorrichtung (106, 107) auszuführen sind, die aufgefordert werden soll, die von den Kommunikationsvorrichtungen, die zu der spezifischen Gruppe gehören, empfangenen Daten zu verarbeiten und die so verarbeiteten Daten in Verbindung mit Informationen, die angeben, dass die Daten bereits verarbeitet wurden, an die Steuereinheit (301) zu senden.

12. Informationsverarbeitungsvorrichtung (101) nach Anspruch 11, die weiter konfiguriert ist zum:
wenn ein Indexwert einer Last für Daten, die von Kommunikationsvorrichtungen empfangen werden, die zu mindestens einer ersten Gruppe und einer zweiten Gruppe unter der einen oder den mehreren Gruppen gehören, eine vorgeschriebene Referenz erreicht, die Kommunikationsvorrichtungen, die zu der ersten Gruppe gehören, auffordert, im Voraus einen ersten Prozess auszuführen, der von jeder Kommunikationsvorrichtung, die zu der ersten Gruppe gehört, aus den Prozessen ausgeführt werden kann, die von der Informationsverarbeitungsvorrichtung (106, 107) auszuführen sind, die aufgefordert werden soll, die von den Kommunikationsvorrichtungen, die zu der ersten Gruppe gehören, empfangenen Daten zu verarbeiten, und die Kommunikationsvorrichtungen, die zu der zweiten Gruppe gehören, auffordert, im Voraus einen zweiten Prozess auszuführen, der von jeder Kommunikationsvorrichtung, die zu der zweiten Gruppe gehört, aus den Prozessen ausgeführt werden kann, die von der Informationsverarbeitungsvorrichtung (106, 107) auszuführen sind, die zur Verarbeitung der von den Kommunikationsvorrichtungen, die zu der zweiten Gruppe gehören, empfangenen Daten aufgefordert werden soll.

13. Informationsverarbeitungsvorrichtung (101) nach Anspruch 11, die weiter konfiguriert ist zum:
Durchführen einer Steuerung des Umschaltens eines Bereichs von Kommunikationsvorrichtungen, die aufgefordert werden sollen, im Voraus einen Prozess auszuführen, dessen Ausführung von der Informationsverarbeitungsvorrichtung (106, 107) angefordert werden soll, auf einen Bereich von Kommunikationsvorrichtungen, die zu einer bestimmten Gruppe unter der Vielzahl von Kommunikationsvorrichtungen gehören, wenn ein Indexwert einer ersten Last für Daten, die von einer Kommunikationsvorrichtung empfangen werden, die zu der bestimmten Gruppe gehört, einen ersten Schwellenwert erreicht, oder auf einen Bereich von Kommunikationsvorrichtungen, die zu verschiedenen Gruppen unter der Vielzahl von Kommunikationsvorrichtungen gehören, wenn ein Indexwert einer zweiten Last für Daten, die von Kommunikationsvorrichtungen empfangen werden, die zu den verschiedenen Gruppen gehören, einen zweiten Schwellenwert erreicht.

## Revendications

1. Support de stockage lisible par ordinateur stockant un programme de commande de processus qui amène un ordinateur (101), couplé à une pluralité de dispositifs de communication (102, 103) et à un ou plusieurs dispositifs de traitement d'informations (106, 107), à exécuter un processus de commande comprenant :
la réception de données à partir de chacun de la pluralité de dispositifs de communication qui sont groupés en un ou plusieurs groupes et transmettent des données collectées respectives ;
la demande adressée à un dispositif de traitement d'informations (106, 107) correspondant de traiter les données reçues ;
le calcul d'une valeur d'indice d'une charge pour des données reçues à partir de dispositifs de communication appartenant à un groupe spécifique parmi les un ou plusieurs groupes, et
lorsque la valeur d'indice calculée atteint une référence prescrite, la demande adressée aux dispositifs de communication appartenant au groupe spécifique d'exécuter à l'avance un processus (APL2) exécutable par chaque dispositif de communication appartenant au groupe spécifique, parmi des processus (APL2, APL3) devant être exécutés par le dispositif de traitement d'informations (106, 107) correspondant qui doit recevoir la demande de traiter les données reçues à partir des dispositifs de communication appartenant au groupe spécifique et de transmettre les données ainsi traitées en association avec des informations indiquant que les données ont déjà été traitées à l'ordinateur (101).

2. Support de stockage selon la revendication 1, dans lequel le processus de commande comprenant en outre :
lorsqu'une première valeur d'indice d'une charge pour des données reçues à partir de dispositifs de communication appartenant à un premier groupe et une seconde valeur d'indice d'une charge provenant de dispositifs de communication appartenant à un second groupe atteignent la référence prescrite, la demande adressée aux dispositifs de communication appartenant au premier groupe d'exécuter à l'avance un premier processus exécutable par chaque dispositif de communication appartenant au premier groupe parmi des processus devant être exécutés par le dispositif de traitement d'informations (106, 107) qui doit recevoir la demande de traiter les données reçues à partir des dispositifs de communication appartenant au premier groupe, et la demande adressée au dispositif de communication appartenant au second groupe d'exécuter à l'avance un second processus exécutable par chaque dispositif de communication appartenant au second groupe parmi des processus devant être exécutés par le dispositif de traitement d'informations (106, 107) qui doit recevoir la demande de traiter les données reçues à partir des dispositifs de communication appartenant au second groupe.

3. Support de stockage selon la revendication 2, dans lequel le processus de commande comprenant en outre :
lorsqu'une valeur d'indice d'une charge totale pour des données reçues à partir de dispositifs de communication appartenant à un nombre spécifique de groupes atteint un seuil spécifique, la demande adressée aux dispositifs de communication appartenant au nombre spécifique de groupes d'exécuter à l'avance un processus exécutable par chaque dispositif de communication appartenant au nombre spécifique de groupes parmi des processus devant être exécutés par le dispositif de traitement d'informations (106, 107) qui doit recevoir la demande de traiter les données reçues à partir des dispositifs de communication appartenant au nombre spécifique de groupes.

4. Support de stockage selon l'une quelconque des revendications 1 à 3, dans lequel le processus de commande comprenant en outre :
la commutation d'une adresse désignée dans une demande adressée au dispositif de traitement d'informations (106, 107) de traiter des données, entre une adresse pour les données reçues avant que l'exécution à l'avance du processus soit commencée, et une adresse pour des données reçues après que l'exécution à l'avance du processus a commencé.

5. Support de stockage selon l'une quelconque des revendications 1 à 4, dans lequel la valeur d'indice est une quantité de réception des données par unité de temps et/ou le nombre de processus de réception ou de transmission des données par unité de temps.

6. Support de stockage selon la revendication 1, dans lequel le processus de commande comprenant en outre
la demande adressée aux dispositifs de communication appartenant au groupe spécifique d'annuler l'exécution à l'avance du processus, lorsque la valeur d'indice de la charge pour les données reçues à partir des dispositifs de communication appartenant au groupe spécifique est inférieure à la référence prescrite.

7. Support de stockage selon la revendication 2, dans lequel le processus de commande comprenant en outre
la demande adressée aux dispositifs de communication appartenant au premier groupe d'annuler l'exécution à l'avance du premier processus lorsque la première valeur d'indice est inférieure à la référence prescrite, et
la demande adressée aux dispositifs de communication appartenant au second groupe d'annuler l'exécution à l'avance du second processus, lorsque la valeur d'indice de la charge est inférieure à la référence prescrite.

8. Procédé de commande de processus exécuté par un ordinateur (101), couplé à une pluralité de dispositifs de communication (102, 103) et à un ou plusieurs dispositifs de traitement d'informations (106, 107), le procédé comprenant :
la réception de données à partir de chacun de la pluralité de dispositifs de communication qui sont groupés en un ou plusieurs groupes et transmettent des données collectées respectives ;
la demande adressée à un dispositif de traitement d'informations (106, 107) correspondant de traiter les données reçues ;
le calcul d'une valeur d'indice d'une charge pour des données reçues à partir de dispositifs de communication appartenant à un groupe spécifique parmi les un ou plusieurs groupes, et
lorsque la valeur d'indice calculée atteint une référence prescrite, la demande adressée aux dispositifs de communication appartenant au groupe spécifique d'exécuter à l'avance un processus (APL2) exécutable par chaque dispositif de communication appartenant au groupe spécifique, parmi des processus (APL2, APL3) devant être exécutés par le dispositif de traitement d'informations (106, 107) correspondant qui doit recevoir la demande de traiter les données reçues à partir des dispositifs de communication appartenant au groupe spécifique et de transmettre les données ainsi traitées en association avec des informations indiquant que les données ont déjà été traitées à l'ordinateur (101).

9. Procédé de commande de processus selon la revendication 8, dans lequel le procédé comprenant en outre :
lorsqu'une valeur d'indice d'une charge pour des données reçues à partir de dispositifs de communication appartenant à au moins un premier groupe et un second groupe parmi les un ou plusieurs groupes atteint une référence prescrite, la demande adressée aux dispositifs de communication appartenant au premier groupe d'exécuter à l'avance un premier processus exécutable par chaque dispositif de communication appartenant au premier groupe parmi des processus devant être exécutés par le dispositif de traitement d'informations (106, 107) qui doit recevoir la demande de traiter les données reçues à partir des dispositifs de communication appartenant au premier groupe, et la demande adressée aux dispositifs de communication appartenant au second groupe d'exécuter à l'avance un second processus exécutable par chaque dispositif de communication appartenant au second groupe parmi des processus devant être exécutés par le dispositif de traitement d'informations (106, 107) qui doit recevoir la demande de traiter les données reçues à partir des dispositifs de communication appartenant au second groupe.

10. Procédé de commande de processus selon la revendication 8, dans lequel le procédé comprenant en outre :
la réalisation d'une commande de commutation d'une plage de dispositifs de communication devant recevoir la demande d'exécuter à l'avance un processus pour lequel le dispositif de traitement d'informations (106, 107) doit recevoir une demande d'exécution, à une plage de dispositifs de communication appartenant à un groupe spécifique parmi la pluralité de dispositifs de communication lorsqu'une valeur d'indice d'une première charge pour des données reçues à partir d'un dispositif de communication appartenant au groupe spécifique atteint un premier seuil, ou à une plage de dispositifs de communication appartenant à différents groupes parmi la pluralité de dispositifs de communication lorsqu'une valeur d'indice d'une seconde charge pour des données reçues à partir de dispositifs de communication appartenant aux différents groupes atteint un second seuil.

11. Dispositif de traitement d'informations (101) comprenant une unité de commande (301), configuré pour :
recevoir des données à partir de chacun d'une pluralité de dispositifs de communication (102, 103) qui sont groupés en un ou plusieurs groupes et transmettent des données collectées respectives ;
demander à un dispositif de traitement d'informations (106, 107) correspondant de traiter les données reçues ;
calculer une valeur d'indice d'une charge pour des données reçues à partir de dispositifs de communication appartenant à un groupe spécifique parmi les un ou plusieurs groupes, et
lorsque la valeur d'indice calculée atteint une référence prescrite, demander aux dispositifs de communication appartenant au groupe spécifique d'exécuter à l'avance un processus (APL2) exécutable par chaque dispositif de communication appartenant au groupe spécifique, parmi des processus (APL2, APL3) devant être exécutés par le dispositif de traitement d'informations (106, 107) correspondant qui doit recevoir la demande de traiter les données reçues à partir des dispositifs de communication appartenant au groupe spécifique et de transmettre les données ainsi traitées en association avec des informations indiquant que les données ont déjà été traitées à l'unité de commande (301).

12. Dispositif de traitement d'informations (101) selon la revendication 11, en outre configuré pour :
lorsqu'une valeur d'indice d'une charge pour des données reçues à partir de dispositifs de communication appartenant à au moins un premier groupe et un second groupe parmi les un ou plusieurs groupes atteint une référence prescrite, demander aux dispositifs de communication appartenant au premier groupe d'exécuter à l'avance un premier processus exécutable par chaque dispositif de communication appartenant au premier groupe parmi des processus devant être exécutés par le dispositif de traitement d'informations (106, 107) qui doit recevoir la demande de traiter les données reçues à partir des dispositifs de communication appartenant au premier groupe, et demander aux dispositifs de communication appartenant au second groupe d'exécuter à l'avance un second processus exécutable par chaque dispositif de communication appartenant au second groupe parmi des processus devant être exécutés par le dispositif de traitement d'informations (106, 107) qui doit recevoir la demande de traiter les données reçues à partir des dispositifs de communication appartenant au second groupe.

13. Dispositif de traitement d'informations (101) selon la revendication 11, en outre configuré pour :
réaliser une commande de commutation d'une plage de dispositifs de communication devant recevoir la demande d'exécuter à l'avance un processus pour lequel le dispositif de traitement d'informations (106, 107) doit recevoir une demande d'exécution, à une plage de dispositifs de communication appartenant à un groupe spécifique parmi la pluralité de dispositifs de communication lorsqu'une valeur d'indice d'une première charge pour des données reçues à partir d'un dispositif de communication appartenant au groupe spécifique atteint un premier seuil, ou à une plage de dispositifs de communication appartenant à différents groupes parmi la pluralité de dispositifs de communication lorsqu'une valeur d'indice d'une seconde charge pour des données reçues à partir de dispositifs de communication appartenant aux différents groupes atteint un second seuil.
